# EUROPÄISCHE PATENTSCHRIFT

(11) **EP 4 430 501 B1**
(45) Veröffentlichungstag und Bekanntmachung des Hinweises auf die Patenterteilung: **29.01.2025**
(21) Anmeldenummer: 22830686.6
(22) Anmeldetag: 08.11.2022
(51) Int. Cl.: G06F 21/64, H04L 9/40

(54) **VERFAHREN UND ZUGEHÖRIGE COMPUTERSYSTEME ZUR SICHERUNG DER INTEGRITÄT VON DATEN**
METHOD AND RELATED COMPUTER SYSTEMS FOR SAFEGUARDING THE INTEGRITY OF DATA
PROCÉDÉS ET SYSTÈMES INFORMATIQUES ASSOCIÉS POUR SÉCURISER L'INTÉGRITÉ DE DONNÉES

(30) Priorität: 08.11.2021 LU 500837
(43) Veröffentlichungstag der Anmeldung: 18.09.2024
(73) Patentinhaber: KraLos GmbH, 31303 Burgdorf (DE)
(72) Erfinder: GREIWE, Christian Clemens, 59846 Sundern (DE); KLEIN, Carsten, 31303 Burgdorf (DE)
(74) Vertreter: Gruner, Leopold Joachim
(86) Internationale Anmeldenummer: PCT/EP2022/081183
(87) Internationale Veröffentlichungsnummer: WO 2023/079186

(56) Entgegenhaltungen:
- US-A1- 2001 044 820
- US-A1- 2005 193 096
- US-A1- 2008 098 301
- US-A1- 2020 366 696
- ANONYMOUS: "Reverse proxy - Wikipedia", 9 September 2021 (2021-09-09), pages 1 - 3, XP055933388, Retrieved from the Internet <URL:https://en.wikipedia.org/w/index.php?title=Reverse_proxy&oldid=1043378821> [retrieved on 20220620]

## Beschreibung

### Technisches Gebiet

Die vorliegende Erfindung bezieht sich im Allgemeinen auf ein Verfahren und entsprechende computerbasierte Vorrichtungen zur Sicherung der Integrität von Daten zum Betrieb eines Service. Die Erfindung bezieht sich dabei insbesondere auf ein Verfahren zum Erzeugen eines intendierten Zustandes von Daten, die in einem Medium oder System gespeichert oder gesichert werden können, zum Übertragen des intendierten Zustands der Daten an ein weiteres System, zum Überprüfen und Sichern der Integrität der Daten auf dem weiteren System, und zum Ermöglichen der späteren Analyse nach einer unerwünschten Manipulation der Daten. Die Erfindung bezieht sich weiterhin auf computerlesbare Medien mit computerausführbaren Programmprodukten, auf Computersysteme, die diese Medien und Programmprodukte enthalten, sowie auf ein Computernetzwerk aus Computersystemen, wobei diese das Verfahren bzw. die einzelnen Verfahrensschritte zumindest teilweise oder vollständig ausführen.

### Stand der Technik

Die vorliegende Erfindung bezieht sich auf das technische Gebiet der Datenverarbeitung, insbesondere handelt es sich um eine Erfindung aus dem Feld der IT-Sicherheit. Auf diesem technischen Gebiet der Datenverarbeitung sind verschiedene Techniken aus dem Stand der Technik bekannt.

Sicherheit in der IT muss dabei insbesondere weniger als ein Zustand und viel mehr als ein Prozess verstanden werden, da es sowohl auf Seiten der Angreifer als auch auf Seiten der Anwender, die ihre Systeme schützen wollen, immer wieder zu neuen Entwicklungen kommt, die sich durch das Internet schnell verbreiten.

Zur Absicherung der Kommunikation von Computern über Netzwerke haben sich verschiedene Methoden etabliert.

Ein Computer ist eine physische Repräsentation einer universellen Turingmaschine. Auf ihm wird ein Computergramm betrieben, das Grundfunktionen wie Dateizugriff, (visuelle) Benutzeroberfächen ((graphic) user interface, (G)UI) oder auch Netzwerk-Funktionalitäten bereitstellt (Betriebssystem/ Operating System, OS). Das Betriebssystem wiederum erlaubt den Betrieb weiterer Software, die auf einer anderen Abstraktionsebene geschrieben werden kann.

Ein Computer besteht in der Regel aus mindestens einer Recheneinheit (central processing unit, CPU), einem Hauptspeicher (Arbeitsspeicher/RAM) und einem Permanentspeicher.

Auch sogenannte Smartphones oder loT (Internet of Things) Devices, wie bspw. Webcams, smarte Leuchtmittel, Thermostate, aber auch Waschmaschinen, Geschirrspüler usw. können Computer nach dieser Definition sein.

Ein Netzwerk bezeichnet einen Verbund aus logisch voneinander getrennten Computersystemen, die miteinander kommunizieren können. Werden mehrere Computersysteme auf einem physischen Computer betrieben und können diese Computersysteme untereinander kommunizieren, bezeichnet man dies auch als ein Netzwerk.

Möchte man zwischen einem Netzwerk von Computern und einem Netzwerk von Computersystemen innerhalb eines Computers unterscheiden, spricht man bei ersterem von einem physischen Netzwerk und bei letzterem von einem virtuellen Netzwerk. Ein virtuelles Netzwerk (virtual local area network, VLAN) kann auch über ein physisches Netzwerk zwischen Computersystemen, die über mehrere Computer verteilt sind, hergestellt werden.

Netzwerke werden vor allem zum Austausch von Informationen zwischen Computern verwendet. Dieser Informationsaustausch findet durch verschiedene (Web-)Services statt.

Ein (Web-)Service besteht aus mindestens einem Computerprogramm, das mindestens eine Funktionalität über ein Netzwerk bereitstellt. Dabei kann es sich auch um ein virtuelles Netzwerk innerhalb eines Hostcomputers handeln. Üblicherweise offenbaren Webservices Informationen. Die Worte Dienst, Webdienst oder Internetdienst werden synonym zu Webservices verwendet. Webdienste zeichnen sich in der Regel dadurch aus, dass sie über bestimmte, vordefinierte Protokolle wie bspw. Hypertext transfer protocol (HTTP) ansprechbar sind.

Prinzipiell gibt es verschiedene Möglichkeiten zum Betrieb und zur Skalierung eines Webservice. Der offensichtliche Weg wäre vermutlich, einen Computer in einem Netzwerk mit einem Betriebssystem zu betreiben und auf diesem Computer einen Webservice zu betreiben.

Zur Skalierung könnte man dann zunächst den Computer aufrüsten, bis er auf dem Maximum der Leistungsfähigkeit der jeweilig aktuellen Hardwaregeneration wäre.

Aus verschiedensten Gründen haben sich unterschiedliche Mittel der Virtualisierung, insbesondere virtuelle Maschinen und sogenannte Container (auch Jails genannt) durchgesetzt.

Ein Computersystem bezeichnet hier daher eine beliebige Konfiguration (Computer mit Betriebssystem, virtuelle Maschine, Container o.Ä.), welche die notwendigen Voraussetzungen zum Betrieb eines Webservices (i.d.R. Bereitstellung eines Dateisystems, einer Netzwerkfunktionalität und Betrieb von Software) erfüllt. Zur Bereitstellung einer Softwarefunktionalität umfasst ein Computersystem insbesondere Medien (Hardware) mit darauf gespeicherten Computerprogrammprodukten (computerlesbare Software).

Ein Softwareagent, nachfolgend auch Agent genannt, bezeichnet nachfolgend ein Computerprogrammprodukt, welches ein genau spezifiziertes, eigenständiges Verhalten aufweist, also seine spezifische Aufgabe ohne Aufforderung von außen durchführt.

Ein Computersystem, das einen Webservice in einem Netzwerk bereitstellt, nennt man Server oder Webserver.

Ein Netzwerk, bei dem man davon ausgehen muss, dass ein potenzieller Angreifer in diesem Netzwerk Zugriff auf einen anderen Computer hat, sodass der Angreifer beliebige Daten über das Netzwerk senden und so ggf. das eigene Computersystem angreifen kann, ist unsicher. Insbesondere ist das Internet ein unsicheres Netzwerk.

Zur Absicherung der Kommunikation über ein potenziell unsicheres Netzwerk stehen verschiedenste Techniken zur Verfügung.

Aus dem Stand der Technik ist beispielsweise eine Technik bekannt, bei der aus Daten ein sogenannter Streuwert (auch als Hash oder Hashwert oder auch Prüfsumme bezeichnet) berechnet wird. Regelmäßig kommt dabei eine sogenannte Streuwertfunktion (Hashfunktion) zum Einsatz. Eine solche Hashfunktion wird beispielsweise durch den sicheren Hash-Algorithmus (SHA, secure hash algorithm) bereitgestellt. Mit einer Hashfunktion kann häufig ein in seiner Größe nicht notwendigerweise beschränkter Datenblock auf einen Datenblock fester Größe, den Hash oder Hashwert, abgebildet werden. Eine typische Länge für einen Hash ist beispielsweise 256 bit. Eine wünschenswerte Eigenschaft einer guten kryptologischen Hashfunktion ist eine näherungsweise Injektivität und eine dadurch erzielte näherungsweise Kollisionsresistenz. Die "ideale Hashfunktion" ist daher vollständig linkseindeutig und kollisionsfrei und bildet unterschiedliche Eingangsdaten immer auf unterschiedliche Hashes ab.

Das Transmission Control Protocol (TCP) ist ein typischer Anwendungsfall für eine Hashfunktion, wobei ein Hashwert für eine größere Datenmenge berechnet wird. Beispielsweise soll eine größere Datenmenge über ein möglicherweise nicht sicheres Übertragungsmedium, wie das Internet, übertragen werden. Zum Beispiel kann durch einen technischen Fehler ein Teil der Daten falsch übertragen werden oder ein Dritter (Angreifer) manipuliert diese Daten.

Wenn der Sender der Daten ihren Hashwert berechnet und diesen Hashwert dem Empfänger zur Verfügung stellt, kann der Empfänger die Echtheit und Unverfälschtheit der Daten verifizieren, vorausgesetzt der Hashwert selbst ist echt und verlässlich.

Abseits von der Nutzung von Prüfsummen hat sich die Nutzung von Verschlüsselung, insbesondere asymmetrischer Verschlüsselung etabliert. Diese bietet den Vorteil, dass der Schlüsselaustausch über ein unsicheres Netzwerk stattfinden kann. Dabei werden ein privater und ein öffentlicher Schlüssel (public key) erzeugt. Daten, die mit dem öffentlichen Schlüssel verschlüsselt wurden, können ausschließlich mittels des privaten Schlüssels (private key) entschlüsselt werden.

Neben der Überprüfung der Integrität nach einer Übertragung mittels Prüfsummen gibt es noch die Absicherung der Integrität durch Nutzung von Zertifikaten. Diese basiert in der Regel auf der Nutzung asymmetrischer Verschlüsselung, bei der ein Webservice ein Zertifikat bereitstellt, in dem eine vertrauenswürdige Instanz (Certificate Authority) für die Identität des Webservices garantiert (durch Signatur mittels eines Zertifikates). Ein Zertifikat enthält dann meist einen öffentlichen Schlüssel, der für Verschlüsselung der initialen Kommunikation mit dem Webservice genutzt werden kann.

Das Hash-Verfahren bringt jedoch den Nachteil mit sich, dass das Verfahren völlig außer Kraft gesetzt wird, wenn der Hashwert selbst während einer Man-In-The-Middle-Attacke manipuliert wird. In einem Beispiel überträgt ein Benutzer A (z. B. Alice) an einen Benutzer B (z. B. Bob) eine Datei und außerdem den Hashwert der Datei. Ein Angreifer E (z. B. Eve) fängt diese Kommunikation ab und ersetzt die Datei durch eine gefälschte Datei. Die gefälschte Datei enthält gefälschte Daten. Außerdem ersetzt E den Hashwert der Datei durch den Hashwert der gefälschten Datei. Wenn B nun die Daten empfängt und überprüft, indem er die Hashfunktion der Datei selbst berechnet und mit dem Hashwert vergleicht, kommt er zu dem Schluss, dass die Daten nicht manipuliert wurden. So hat E erfolgreich die Daten manipuliert, ohne dass dies von B festgestellt wurde. Dies kann auch durch gängige Verschlüsselungsmethoden wie SSL nicht notwendigerweise festgestellt werden, da auch die zur Verschlüsselung genutzten Zertifikate durch E ersetzt werden können, sodass beide Parteien verschlüsselt mit E kommunizieren und vermuten, die Verbindung sei sicher.

Man-In-The-Middle Attacks lassen sich weitestgehend vermeiden, indem bei der Kommunikation zwischen A und B beide zuvor austauschen, welche Zertifikate sie voneinander erwarten und dadurch ausschließen können, dass ein Angreifer E die Kommunikation manipuliert. Dieser Vorgang wird als Certificate Pinning bezeichnet.

Sobald die Kommunikation zwischen zwei Computern ausreichend geschützt ist, wird es für einen möglichen Angreifer einfacher und somit auch kostengünstiger, eine der Kommunikationsparteien direkt anzugreifen, um die Kommunikation abzufangen bzw. zu manipulieren. Somit ist es unerlässlich auch einzelne Computersysteme hinreichend abzusichern.

Angriffe auf Webservices sind insofern besonders attraktiv für mögliche Angreifer, da sie mitunter durch einen geglückten Angriff Zugriff auf die Kommunikation mit dutzenden, hunderten oder tausenden Kunden des Opfers haben, die die geladenen Daten wiederum für berechtigt halten und ihnen vertrauen.

Daraus ergibt sich für Betreiber von Webservices ein besonderes Schutzbedürfnis, zumal auch die Konkurrenz des Betreibers bzw. weitere Interessensgruppen wie Hacker mit einer Gewinnabsicht, aber auch Gruppen wie Anonymous, die rein auf Basis eines ideologischen Antriebs Ziele attackieren.

Zudem ist spätestens mit der Einführung von Datenschutzregulierungen wie der Datenschutzgrundverordnung (DSG-VO), aber auch zuvor in der Handhabung von Zahlungsdaten wie Kreditkartendaten, ein erhebliches wirtschaftliches Schadensrisiko mit dem Betrieb eines Webservices verbunden.

Allgemein lässt sich sagen, dass bei der Absicherung von Computersystemen ein Ansatz mit möglichst vielen Schutzschichten vonnöten ist, da nahezu jedes Schutzsystem überwunden werden kann, aber insbesondere wirtschaftlich motivierte Angreifer in der Regel zunächst die einfachsten Ziele attackieren, da auch sie einer Gewinnmaximierungsabsicht unterliegen. Viele einfach durchzuführende und erfolgreiche Angriffe sind in der Regel profitreicher als der Angriff auf ein komplex abgesichertes System. Daher überwiegt der Nutzen weiterer Sicherheitsmaßnahmen im Normalfall überproportional zu den für die Sicherheitsmaßnahmen aufgewendeten Kosten.

Die erste Schutzschicht, die einem Angreifer entgegensteht, ist meist eine Firewall, die sowohl ein- als auch ausgehende Kommunikation an einem Computer überwacht und eine Zuordnung von Prozessen auf dem Computer zu bestimmten Protokollen, Ports, URLs sowie IP-Adressen erlaubt.

Dabei kann ein Blacklisting, also eine negative Bestimmung von Zugriffsrechten oder eine Whitelisting, eine positive Bestimmung von Zugriffsrechten erfolgen.

Antivirenprogramme überprüfen regelmäßig die permanenten Speicher eines Computers auf bekannte Schadprogramme. Dafür sammelt der Anbieter eines Antivirenprogramms Signaturen bekannter Schadsoftware und häufig auch bestimmte Verhaltensmuster. Nachteilig dabei ist, dass das Überprüfen des Speichermediums auf diese Weise zum einen relativ rechen- und somit zeitaufwändig ist. Zudem ist erforderlich, dass die Schadsoftware bereits bekannt ist.

Als weitere Schutzmaßnahme zur Sicherung von IT-Systemen dient das Berechtigungsmanagement, das die sinnvolle Verwaltung von Zugangsberechtigungen regelt. Nach dem "Principle of least privilege" sollten Anwendungen und Prozesse nur mit den minimal nötigen Berechtigungen gestartet werden. Ferner sollten Strukturen im Dateisystem nur insofern veränderbar sein, wie dies für den jeweiligen technischen Nutzer (bspw. Nutzer zum Ausführen eines Webservers) notwendig ist. Dieser könnte bspw. Lese-Berechtigung für die entsprechende Konfiguration haben, ohne die Konfiguration auch schreiben zu können.

In der Praxis ist diese Maßnahme sehr aufwändig und es kommt immer wieder zu Fehlkonfigurationen, da die korrekte Konfiguration des Berechtigungsmanagements sehr komplex und unübersichtlich ist.

Das Sandboxing stellt ein Verfahren da, bei dem in der Regel durch das Betriebssystem sichergestellt wird, dass eine Anwendung nur einen ihr zugewiesenen Bereich des Dateisystems erreichen kann, sodass diese Anwendung keine Daten anderer Anwendungen und insbesondere keine anderen Anwendungen manipulieren kann. Es handelt sich somit im Grunde um eine automatisierte Spezialanwendung des Berechtigungsmanagements.

Aus DE 601 32 833 T2 ist ein Verfahren bekannt, bei dem in ein Computersystem eingehende Daten, die zu einer möglichen Manipulation führen könnten, in einen isolierten Sandbox-Bereich übertragen werden und dort analysiert werden können. Für eine sichere Übertragung der möglicherweise schädlichen Daten wird eine kryptografische Verschlüsselung angewandt, welche erst im Sandbox-Bereich wieder aufgehoben wird. Das Verfahren zielt speziell auf ein Computersystem ab, welches regelmäßig Daten empfängt und setzt daher eine intelligente Prüfung voraus, welche die Einstufung von eingehenden Daten als potenziell schädlich vornimmt. Bei dem Verfahren wird die gesamte Datei geprüft, sobald diese an das Computersystem übertragen wurde, sodass keine Datenänderungen überwacht oder unterschieden werden müssen.

Eine weitere Möglichkeit stellt die Isolation verschiedener Dienste in getrennte Computersysteme dar. Anstatt mehrere Services wie Webmail, Datenbank und Website auf einem Computer innerhalb eines Betriebssystems bereitzustellen, werden dieses Services bspw. auf unterschiedliche virtuelle Maschinen oder Container verteilt, wodurch beispielsweise ein kompromittierter Mail-Server nicht automatisch zu einer Kompromittierung der Datenbank führt.

Neben der Lösung mittels Antivirenprogrammen, bei der eine negative Berechtigungsliste (Programme, die nicht laufen dürfen) geführt wird, besteht auch die Möglichkeit nur bestimmte Anwendungen zuzulassen, deren Integrität wiederum häufig durch Prüfsummen sichergestellt wird. Diese Möglichkeit wird als Whitelisting bezeichnet.

Aus US 2020/366696 A1 sowie US 2001/044820 A1 sind Verfahren bekannt, bei denen die Integrität von Webservices im Besonderen überwacht wird, um der anspruchsvollen Gefahrensituation im World Wide Web gerecht zu werden. In diesen Verfahren wird als Reaktion einer identifizierten Manipulation des Webservice allerdings nur eine vorher spezifizierte Warnung an ein weiteres System ausgegeben oder der Webservice in Teilen eingestellt bzw. der manipulierte Code entfernt. Somit wird nicht der vollständige Webservice wiederhergestellt. Insbesondere wenn unklar war, welcher Teil des Webservices in welcher Art beeinträchtigt wurde, ist eine nachträgliche Analyse des Angriffsziels und der Angriffsart unter gleichzeitiger Wiederherstellung des Webservices nicht möglich.

Aus DE 20 2014 010 889 U1 ist ein Verfahren zur Verifizierung der Vertrauenswürdigkeit zumindest eines Webservices auf einem Server, der im Internet exponiert ist, bekannt. Dort gehostete Webanwendungen oder Änderungen an diesen Webanwendungen werden auf deren Vertrauenswürdigkeit untersucht, mittels einer Kombination oben beschriebener Methoden, unter anderem Black- und Whitelisting, Prüfung von bekanntem Viren- und Malwarecode, und Prüfung auf Veränderung kryptografischer Hashwerte, sowie eine Listung und Bewertung verschiedener Datenquellen bezüglich deren Konfidenz. Unbekannte Angriffsverfahren könnten die automatisierten Prüfungsverfahren dennoch initial überwinden, sodass schädlicher Code auf dem Server gehostet werden könnte. Der beschriebene Server umfasst jedoch gleichzeitig die verifizierten und nicht verifizierten Webanwendungen sowie die Verifizierungskriterien für verifizierte Webanwendungen, sodass ein erfolgreicher Fremdzugriff auf diesem Server (Vergleiche: Man-in-the-Middle Attack) den intendierten Zustand der gehosteten Webanwendungen manipulieren, sowie zukünftige Verifizierungskriterien möglicherweise unbemerkt manipulieren könnte, da es sich nicht um ein verteiltes oder getrenntes Computersystem handelt.

Ein Computersystem, das in besonderem Maße durch Anwendung anderer, insbesondere mehrerer komplementärer Verfahren aus dem Stand der Technik geschützt und insbesondere nur beschränkt aus einem unsicheren Netzwerk wie dem Internet zugänglich ist, ist ein geschütztes Computersystem im Sinne dieses Dokuments.

Einen besonders hohen Schutzstandard legt im Bereich der IT-Sicherheit der sogenannte Zero-Trust Ansatz an. Zero-Trust impliziert, dass keinem Beteiligten oder Nutzer, beispielsweise eines Netzwerkes, von Grund auf getraut wird. Beispielsweise entspricht dem Zero-Trust Ansatz, angeforderte Änderungen an bestimmte Daten eines Webservices grundsätzlich vor der Umsetzung der Änderung zu überprüfen.

Neben der Absicherung eines Webservices steht zudem die Effizienz im Vordergrund. Insbesondere lange Ladezeiten führen schnell zum "Abspringen" des Nutzers, der aus Ungeduld die Internetseite eines alternativen Anbieters aufruft, aber auch die kostengünstige Skalierung spielt eine Rolle beim wirtschaftlichen Betrieb von Webservices.

Oft werden die Daten, die ein Webservice zur Verfügung stellt, in Teilen oder vollständig zum Zeitpunkt der Anfrage neu berechnet. Als Caching bezeichnet man den Vorgang, bei dem die dabei erzeugten Daten, bspw. HTML-Dokumente, für eine Zeit gespeichert und bei einer in diesem Zeitraum erfolgenden, identischen Anfrage wieder ausgeliefert werden, ohne dass die gesamte Berechnung erneut stattfinden muss. So wird Rechenleistung gespart und die Ladezeit der Daten entsprechend minimiert. Caching für Webservices ist bekannt aus US 2005/0193096 A1 sowie US 2008/0098301 A1**.**

Wie bereits beschrieben, besteht beim Betrieb eines Webservice mitunter der Bedarf, die Last effizienter zu verarbeiten, um bspw. mehr Nutzer zufrieden stellen zu können. Ein wesentliches Merkmal für den Erfolg eines Webservice ist mitunter die Ladezeit, bevor der Server dem Nutzer eine Antwort bereitstellt (response time).

Um diese Ladezeit möglichst gering zu halten, werden in der Regel weitere Computersysteme als Server bereitgestellt, die parallel Anfragen bearbeiten und so die Wartezeit bei einer Vielzahl an Anfragen im Schnitt deutlich senken können.

Ferner können Betreiber eines internationalen Webservice auch entscheiden, Computersysteme in anderen Rechenzentren zu betreiben, um die Distanz zu ihren Kunden zu reduzieren, sodass die Ladezeiten für den Kunden nicht durch Unwägbarkeiten wie physikalische Begrenzungen der Übertragungsleitungen, Peeringabkommen zwischen verschiedenen Internet-Service-Providern (ISPs) oder Ähnliches beeinträchtigt werden.

Ferner sind diese Verfahren in der Regel auch dazu geeignet, um die Ausfallsicherheit eines Webservice zu erhöhen.

Verfahren der hier beschrieben Art nennt man "Load Balancing" oder Lastverteilung.

Neben den bereits beschriebenen Verfahren sollen der Vollständigkeit halber noch weitere Technologien genannt werden, die beim Betrieb eines Webservices eine Rolle spielen können:
Bittorrent ist ein Protokoll zum Austausch von Dateien im Internet. Dabei werden Dateien in direkt zwischen Computern über ein Netzwerk ausgetauscht, ohne dass eine zentrale Instanz zur Koordinierung nötig ist. In dem Protokoll werden ebenfalls Prüfsummen genutzt, um Teile von Dateien auf die korrekte Übertragung zu überprüfen. Auf Basis dieses Protokolls bieten einige Anbieter die Synchronisierung von Daten an. Dies ist bspw. auch geeignet, um die Daten zum Betrieb eines Webservices zwischen verschiedenen Computersystemen, die gemeinsam das Load Balancing umsetzen, zu synchronisieren.

In vielen Netzwerken, insbesondere Firmennetzwerken, gibt es zudem einen sogenannten Proxy, der die Anfragen von Computern im Netzwerk an das Internet entgegennimmt und diese an die entsprechenden Server weiterleitet. Dies wird in der Regel aus Sicherheitsgründen, oder zum Zwecke von Verboten innerhalb des Netzwerks durchgeführt. Durch die Verwendung eines Proxies kann außerdem die IP-Adresse eines Computers verschleiert werden, da der angesprochene Computer nur die IP-Adresse des Proxies erhält.

Bei einem Reverse Proxy handelt es sich um das Gegenteil. Dieser wird in der Regel beim Betrieb eines Webservices vor dem eigentlichen Webservice vorgeschaltet, um den Webservice abzusichern, bestimmte Funktionen des Webservice vor dem Internet zu verschleiern, oder auch um Load Balancing zu implementieren.

### Aufgabe

Die Aufgabe der vorliegenden Erfindung besteht in der Sicherung der Integrität von Daten, wie etwa Dateien oder in Datenbanken gespeicherten Daten auf Servern, die einen Webdienst anbieten und in einem Netzwerk exponiert sind. Weiterhin ist es Aufgabe der vorliegenden Erfindung, im Fall einer Manipulation insbesondere auf einem Server oder auf einem computerlesbaren Medium eine sofortige Isolation kompromittierter Daten zu bewirken. Die isolierten Daten sollen keinen Schaden auf dem Computersystem anrichten können, aber gleichzeitig analysierbar sein. Zudem sollen die Daten und der Webdienst in einen Zustand vor der Manipulation gebracht werden.

### Lösung

Erfindungsgemäß wird die Aufgabe durch ein Verfahren zum Schutz der Integrität von Daten mit den folgenden Schritten gelöst:
a) Erzeugen (S01) eines intendierten Zustands (3) von Daten eines Webservice (2) auf einem ersten/primären, sicheren Computersystem (hierin auch als primäres System oder primäres Computersystem bezeichnet) (1);
b) Übertragen (S02) der Daten durch eine gesicherte Verbindung auf einen oder mehrere Server (hierin auch als sekundäre Computersysteme bezeichnet) (7) in einem potentiell unsicheren Netzwerk zum Bereitstellen eines Webservice (8);
c) Prüfen (S03) (20) der Integrität der Daten, vorzugsweise durch einen Agenten im sekundären Computersystem (11), in einer Weise, dass ein Manipulieren der Daten, insbesondere der Dateien und Daten, durch einen Angreifer auffällt;
d) Wiederherstellen (S04) (21), insbesondere sofortiges Wiederherstellen, des intendierten Zustands der Daten (19) zum Zeitpunkt vor dem Manipulieren, insbesondere dem unbeabsichtigten Manipulieren;
wobei vorzugsweise zwischen Schritt S03 und S04, d.h. zwischen dem Schritt des Prüfens (S03) und dem Schritt des Wiederherstellens (S04) nach einer Manipulation (17) die Daten in Quarantäne verbracht werden, sodass diese im Nachhinein analysiert, aber nicht mehr ausgeführt werden und somit keinen Schaden verursachen können.

Weitere vorteilhafte Ausgestaltungen sind den Unteransprüchen und der Beschreibung zu entnehmen.

### Allgemeine Vorteile

Das erfindungsgemäße Verfahren erhöht die Sicherheit beim Betreiben eines Webservice erheblich, während sie den technischen Aufwand zur Absicherung und somit die Kosten des Betriebs erheblich senkt. Durch die Software-Architekturprinzipien werden die allgemein bekannten technischen Risiken beim Betrieb eines Webservice ohne eine tiefe spezifische Kenntnis des eingesetzten Programms verringert oder eliminiert. Der Manipulationsschutz entspricht in seiner erfindungsgemäßen Ausgestaltung dem Zero-Trust Prinzip nach dem Grundsatz "nicht vertrauen, immer verifizieren", erlaubt aber zeitgleich eine nachträgliche Analyse potenzieller Angriffe. Ferner erhöht das erfindungsgemäße Verfahren den technischen Aufwand und damit die Kosten für einen potentiellen Angreifer enorm, da dieser
a) wissen muss, dass der Webservice durch dieses Verfahren geschützt ist,
b) den Agenten (11) nicht angreifen kann, da der Agent im sekundären System selbst durch das Verfahren geschützt ist,
c) er den Webservice (8) nicht nutzen kann, um Angriffe auf weitere Nutzer vorzunehmen, ohne dabei entdeckt zu werden,
d) auch nicht das primäre System (1) angreifen kann, da dieses durch eine sichere Verbindung ausschließlich mit dem Agenten kommuniziert und sonst nicht mit dem unsicheren Netzwerk verbunden ist.

Aufgrund der deutlich erhöhten Kosten für den Angreifer ist nicht davon auszugehen, dass ein derartig geschütztes sekundäres System (7) weiter attackiert werden würde, da auch Angreifer wirtschaftlichen Zwängen unterliegen und so den Gewinn pro Aufwand maximieren müssen.

### Ausführliche Beschreibung der Erfindung

Nach dem erfindungsgemäßen Verfahren wird auf einem primären Computersystem in einem geschützten Netzwerk ein intendierter Zustand an Daten erzeugt (S01). Diese Daten umfassen insbesondere Dateien zur Bereitstellung eines Webservices sowie Daten aus Datenbanken. Durch das Speichern im geschützten Netzwerk ist der intendierte Zustand der Daten nicht unmittelbar angreifbar oder manipulierbar.

Die Daten werden an ein sekundäres Computersystem übertragen, auf dem der Webservice ausgeführt wird (S02). Dieses sekundäre Computersystem ist in einem unsicheren Netzwerk, beispielsweise im Internet, exponiert und daher angreifbar.

Nach einer bevorzugten Ausgestaltung der vorliegenden Erfindung werden zwischen Schritt S03 und S04, d.h. zwischen dem Schritt des Prüfens (S03) und dem Schritt des Wiederherstellens (S04), die Daten nach einer festgestellten unbeabsichtigten Manipulation in Quarantäne verbracht, sodass die Daten im Nachhinein analysiert, aber nicht mehr ausgeführt werden können, wodurch vorteilhaft ein weiterer Schaden nach der Prüfung verhindert wird.

Die Integrität zumindest des sekundären Computersystems im unsicheren Netzwerk wird daher vorteilhaft durch ein Computerprogrammprodukt (nachfolgend: Agent) geprüft (S03). Manipulierte Daten werden, vorzugsweise durch den Agenten, nach einer festgestellten unbeabsichtigten Manipulation in Quarantäne verbracht, sodass die Daten im Nachhinein analysiert, aber nicht mehr ausgeführt werden können, wodurch vorteilhaft ein weiterer Schaden nach der Prüfung verhindert wird. Diese Manipulation kann erfindungsgemäß so ausgestaltet werden, dass Manipulationen grundsätzlich in Quarantäne verbracht werden, auch wenn nicht klar ist, ob die Manipulation feindseliger Natur ist. Ein auf diese Weise geschütztes System ist vorteilhaft entsprechend des Zero-Trust Ansatzes gesichert und eignet sich vorteilhaft für sicherheitskritische Webdienste in exponierten Netzwerken. Das Verbringen der Daten in Quarantäne dient dem Schutz des Computersystems. Dafür werden auffällige (manipulierte) Daten, bspw. eine korrumpierte Datei, in ein Verzeichnis vorzugsweise auf einem Server verbracht werden, aus dem ein in dieser Datei befindliches Programm nicht gestartet werden kann (Isolation). Bevorzugt ist dieses Verzeichnis auf einem weiteren getrennten System verordnet, wobei dieses System keine Zugriffsrechte auf andere Systeme hat und keine Ausführung von externen Programmen erlaubt. Alternativ bevorzugt wird die Isolation durch Sandboxing auf dem sekundären System erreicht. Alternativ bevorzugt wird die Isolation durch restriktives Berechtigungsmanagement eines Verzeichnisses auf dem sekundären System erreicht.

Im Anschluss an eine erfolgte Manipulation stellt der Agent den intendierten Zustand aus S01 wieder her (S04). Die Wiederherstellung des Zustands wird dabei bevorzugt unmittelbar mit dem Zeitpunkt der Feststellung der Manipulation initialisiert, um vorteilhaft den Webservice so schnell wie technisch möglich wieder anbieten zu können.

In einer bevorzugten Ausgestaltung werden Änderungen der Daten, als ein Beispiel für eine Manipulation (17) von Daten, auf Basis kryptographischer Verfahren festgestellt.

Als kryptographisches Verfahren eignen sich bspw. Signaturen durch Zertifikate. Dieses Verfahren ist standardisiert und wenig fehleranfällig, sodass es nicht zu sogenannten false positives ("falsch Positiven") kommen sollte.

Alternativ bevorzugt kann auf Basis von Hashwerten wie bspw. SHA256, SHA512, MD5 mit möglichst geringer Kollisionswahrscheinlichkeit sichergestellt werden, dass die Datei keinerlei Änderung erfährt, was ggf. leicht fehleranfälliger, aber dafür auch sicherer sein könnte.

In einer weiterhin bevorzugten Ausgestaltung der Erfindung findet das Prüfen (S03) (20) der Integrität der Daten (auch als Überprüfen bezeichnet), insbesondere der Dateien oder Dateienteile, unmittelbar nach dem Manipulieren der Daten, insbesondere der Dateien oder Dateienteile, statt.

Dies kann beispielsweise durch eine regelmäßige Prüfung der Integrität, insbesondere häufiger als einmal pro Stunde, weiterhin insbesondere häufiger als einmal pro 30 Minuten, weiterhin insbesondere häufiger als einmal pro 10 Minuten, weiterhin insbesondere häufiger als einmal pro 5 Minuten, weiterhin insbesondere häufiger als einmal pro Minute, weiterhin insbesondere häufiger als einmal pro Sekunde, weiterhin insbesondere häufiger als einmal pro 500 Millisekunden, weiterhin insbesondere häufiger als einmal pro 100 Millisekunden, weiterhin insbesondere häufiger als einmal pro 10 Millisekunden, weiterhin insbesondere häufiger als einmal pro Millisekunde, weiterhin insbesondere häufiger als einmal pro 500 Mikrosekunden, weiterhin insbesondere häufiger als einmal pro 100 Mikrosekunden, weiterhin insbesondere häufiger als einmal 100 Mikrosekunden, weiterhin insbesondere häufiger als einmal pro 10 Mikrosekunden, weiterhin insbesondere häufiger als einmal pro Mikrosekunde, weiterhin insbesondere häufiger als einmal pro 500 Nanosekunden, weiterhin insbesondere häufiger als einmal pro 100 Nanosekunden, weiterhin insbesondere häufiger als einmal pro 10 Nanosekunden, weiterhin insbesondere häufiger als einmal pro Nanosekunde, weiterhin insbesondere häufiger als einmal pro 500 Picosekunden, weiterhin insbesondere häufiger als einmal pro 100 Picosekunden, weiterhin insbesondere häufiger als einmal pro 10 Picosekunden, weiterhin insbesondere häufiger als einmal pro Picosekunde, weiterhin insbesondere häufiger als einmal pro 500 Femtosekunden, weiterhin insbesondere häufiger als einmal pro 100 Femtosekunden, weiterhin insbesondere häufiger als einmal pro 10 Femtosekunden, weiterhin insbesondere häufiger als einmal pro Femtosekunde, erreicht werden.

Bevorzugt sollte das Prüfungsintervall im Fall des regelmäßigen Überprüfens der Dateien in der Größenordnung der Ausführungszeit der notwendigen Taktzyklen der CPU je nach verwendeten Prüfalgorithmus liegen.

Durch die regelmäßige Prüfung binnen kürzester Zeitintervalle wird die Zeit, die ein Angreifer zum Erreichen seiner Ziele hat, vorteilhaft verkürzt, sodass dieser im Optimalfall keinerlei Schaden anrichten kann. Da viele Angriffe nach einer erfolgten (teil)automatischen Infektion des angegriffenen Systems einer händischen Analyse durch den Angreifer bedürfen, kann bereits durch Prüfungen mit einem Intervall in der Größenordnung von wenigen Minuten ein erheblich höheres Sicherheitsniveau erreicht werden. Durch eine weitere Verkürzung des Prüfintervalls können auch hochautomatisierte Angriffe erkannt und blockiert werden, bevor ein Schaden entstehen kann.

Alternativ kann die Unmittelbarkeit der Prüfung durch die Verwendung von Watchdogs sichergestellt werden. Moderne Betriebssysteme erlauben die Registrierung eines sogenannten Watchdog. Dabei wird dem Betriebssystem mitgeteilt, dass bei einer Manipulation einer Datei oder der Inhalte eines Verzeichnisses ein bestimmter Prozess gestartet werden soll. Dieser Prozess wird als Watchdog bezeichnet.

In einer Ausgestaltung des erfindungsgemäßen Verfahrens kann auf Basis der Verwendung eines Watchdog seine unmittelbare Reaktion auf eine Manipulation der Daten erfolgen, ohne dass viele Ressourcen durch das ständige Prüfen blockiert würden. Somit handelt es sich um eine ressourcensparende Umsetzung zur Sicherung der Unmittelbarkeit des Prüfens der manipulierten Daten.

Es kann in dem Verfahren vorgesehen sein, dass durch einen Nutzer definierte Daten (bspw. Dateien, Dateienteile und/oder andere Daten) für das Prüfen (S03) auf Manipulationen registriert werden oder durch einen Nutzer definierte Daten (bspw. Dateien, Dateienteile und/oder andere Daten) von dem Prüfen (S03) auf Manipulationen ausgenommen werden. In einer weiteren Ausgestaltung der Erfindung kann der Nutzer des erfindungsgemäßen Verfahrens daher festlegen, dass Daten, Dateien oder Teile von Dateien (Dateienteile) des Webservices in Schritt S03, d.h. im Schritt des Prüfens (S03), geprüft und im Fall einer Manipulation isoliert werden (Blacklisting). In einer bevorzugten weiteren Ausgestaltung der Erfindung kann der Nutzer des erfindungsgemäßen Verfahrens festlegen, dass Daten, Dateien oder Teile von Dateien des Webservices in Schritt S03, d.h. im Schritt des

Prüfens (S03), nicht geprüft werden (Whitelisting). Beide Ausgestaltungen des Verfahrens stellen Optionen zur Abweichung von dem intendierten Prinzip dar, nach Zero-Trust Ansatz alle manipulierten Dateien in Quarantäne zu verbringen. Der Whitelisting Ansatz ist hierbei die bevorzugte Ausgestaltung der Erfindung, da er dem Nutzer erlaubt, bekannte Änderungen zu akzeptieren, um falsch positive Manipulationsfälle zu verhindern - also solche, die nicht feindselig waren. Gleichzeitig bleibt der Zero-Trust Ansatz für alle nicht gelisteten Manipulationsfälle bestehen, einschließlich der potenziellen unbekannten Fälle.

In einer weiteren bevorzugten Ausgestaltung werden in Schritt S01 des Verfahrens, d.h. im Schritt des Erzeugens des intendierten Zustands (S01), vermeintlich dynamische Daten des Webservice, insbesondere Dateien, wie bspw. durch PHP gerenderte HTML-Seiten, soweit es der betriebene Dienst erlaubt, als statische Dateien, wie bspw. HTML-, JSON- oder XML-Dateien, an das sekundäre System übertragen. Dies ist hilfreich, um mögliche Sicherheitslücken im ausführbaren Programmcode, soweit möglich, ausschließlich auf dem primären, sicheren System auszuführen und vorteilhaft die Ladezeiten sowie die Ausfallsicherheit des Dienstes zu verbessern.

Es kann vorgesehen sein, dass das Auslösen des Übertragens der Daten von dem primären Computersystem (1) an ein sekundäres Computersystem (7)
a) manuell ausgelöst wird, oder
b) automatisch zeitgesteuert ausgelöst wird, oder
c) automatisch nach Veränderung des intendierten Zustandes der Daten ausgelöst wird.

In einer möglichen Ausbildung des erfindungsgemäßen Verfahrens findet das Übertragen der Daten von einem primären an ein sekundäres System manuell statt. Dies bietet dem Betreiber der Website die volle Kontrolle darüber, wann welche Daten übertragen werden.

In einer bevorzugten Ausgestaltung erfolgt die Übertragung der Daten automatisch zeitgesteuert, was dafür sorgt, dass der Webservice in seiner öffentlich zugänglichen Form regelmäßig auf den aktuellen intendierten Zustand der Daten gebracht wird. Die Zeitsteuerung wiederum kann einem zufälligen Muster entsprechen, sodass ein möglicher Angreifer nicht vorhersehen kann, wann es zu einer erneuten Übertragung kommt.

In einer besonders bevorzugten Ausgestaltung des Verfahrens findet die Übertragung der Daten automatisch nach Veränderung des intendierten Zustandes der Daten statt. Dies hat den Vorteil, dass die öffentlich zugängliche Version der Daten immer dem zuletzt aktualisierten Zustand entspricht.

Die Übertragung der Daten kann wahlweise a) den gesamten intendierten Zustand, bevorzugt aber b) nur die Differenz zu dem vorausgehenden intendierten Zustand der Daten vom primären zum sekundären System umfassen. Nach a) ist die Möglichkeit für Fehler durch eine fehlerhafte Delta-Berechnung stärker eingeschränkt, dafür bietet b) eine Bandbreitenersparnis, was insbesondere bei umfangreichen Daten von großem Vorteil ist. Zudem bietet die Option des inkrementellen Updates den Vorteil, dass selbst eine kompromittierte Kommunikation des primären und des sekundären Systems keinen Rückschluss auf sämtliche Daten zum Betrieb des Webservices zulässt. Nach einer bevorzugten Ausgestaltung der Erfindung wird gemäß b) bei dem im Schritt des Übertragens der Daten (S02) nur die Differenz des intendierten Zustands zu dem zeitlich vorhergehenden intendierten Zustand der Daten vom primären Computersystem (1) an das sekundäre Computersystem (7) übertragen. In einer weiteren bevorzugten Ausgestaltung der Erfindung wird gemäß a) jede Änderung eines intendierten Zustands (3) und jede Übertragung an das sekundäre Computersystem im Schritt des Übertragens der Daten (S02) revisionssicher gespeichert, wodurch eine spätere Auditierung ermöglicht wird.

In einer weiteren Ausbildung des Verfahrens wird die Änderung der intendierten Zustände und deren Übertragung revisionssicher gespeichert, wodurch eine spätere Auditierung ermöglicht wird.

Das Auditieren der Änderung stellt eine Praxis dar, bei der im Nachhinein nachvollzogen werden kann, wann welche Änderungen von wem vorgenommen wurden. Dafür müssen die Daten revisionssicher, als unveränderlich, gespeichert werden können.

Vorzugweise erfolgt dies mittels einer Blockchain, da in dieser dezentral Informationen revisionssicher gespeichert und übertragen werden, wodurch auch S02 zumindest teilweise realisiert werden kann.

Unter Blockchain versteht man eine Technologie, die ähnlich einer Datenbank Informationen speichert. Dabei sind die Informationen nicht zentralisiert in einem Computersystem gespeichert, sondern befinden sich auf vielen Systemen gleichzeitig. Alle Instanzen der Datenbank enthalten dabei alle Informationen und die gesamte Historie ist zu jedem Zeitpunkt abrufbar. Solange sich kein Konsens im Netzwerk aller Instanzen bildet, können historische Einträge nicht gelöscht werden.

Durch das erfindungsgemäße Verfahren werden auch Daten in einer Datenbank geschützt. Die Integrität der Daten in der Datenbank wird gesichert indem
a) entweder nach jedem erwünschten Manipulieren der Daten durch den Webservice die entsprechende Abfrage (Query) zunächst auf schadhafte Eingaben (bspw. SQL Injections, oder Änderungen an verbotenen Datensätzen, wie Datenbanknutzern bzw. -rechten) überprüft, dann gesichert an das primäre System übertragen und in der Folge die erfolgten Änderungen der Daten an die sekundären Systeme gespiegelt werden, oder
b) nach jedem erwünschten Manipulieren der Daten durch den Webservice die Query zunächst auf schadhafte Eingaben (bspw. SQL Injections, oder Änderungen an verbotenen Datensätzen, wie Datenbanknutzern bzw. -rechten) überprüft und dann gesichert an das primäre System übertragen wird und auch Lesezugriffe auf die Datenbank durch den Agenten geprüft und an das primäre System übertragen werden, sodass keine Datenbank im sekundären System notwendig ist, oder
c) die Datenbank auf dem Sekundärsystem regelmäßig auf ein unintendiertes Ändern von verbotenen Datensätzen wie Datenbanknutzern oder anderen Daten, die nicht durch den Service bearbeitet werden müssen, überprüft wird.

Nach einer bevorzugten Ausgestaltung der Erfindung sind die Daten zum Erzeugen des Webservice aus Daten einer Datenbank ausgewählt, und wobei die Integrität der Daten in der Datenbank (4) gesichert wird, indem
a) entweder jede Anfrage an die Datenbank (13) zunächst, insbesondere durch den Agenten (11), auf schadhafte Eingaben (bspw. SQL Injections, oder Änderungen an verbotenen Datensätzen, wie Datenbanknutzern) überprüft, dann gesichert an die primäre Datenbank (4) des primären Computersystems (1) übertragen werden (14) und in der Folge die erfolgten Änderungen an die sekundäre Datenbank (9) im sekundären Computersystem (7) gespiegelt werden, oder
b) jede Anfrage an die Datenbank (13) zunächst, insbesondere durch den Agenten (11), auf schadhafte Eingaben überprüft und dann gesichert an das primäre Computersystem (1) übertragen werden (14) und auch Lesezugriffe (15) auf die Datenbank, insbesondere durch den Agenten (11), geprüft und an das primäre Computersystem übertragen werden (16), sodass keine Datenbank im sekundären System (7) notwendig ist, oder
c) die Datenbank auf dem sekundären System (9) regelmäßig, insbesondere durch den Agenten (11), auf ein Ändern von verbotenen Datensätzen, die nicht durch den Webservice (8) bearbeitet werden sollen, überprüft wird.

Der Schutz der Daten in Datenbanken ist insbesondere deshalb von größter Relevanz, da hierdurch wohlbekannte Problematiken, wie bspw. sogenannte SQL Injections verhindert werden können. SQL Injections sind ein großes Sicherheitsproblem, bei dem ein Angreifer Zugang zu beliebigen Daten in einer Datenbank erhalten kann, wenn die auf die Datenbank zugreifende Software nicht entsprechend abgesichert wurde. Kein Verfahren aus dem Stand der Technik schützt jede Dritthersteller-Software vor solchen Angriffen.

Dies ist insbesondere deshalb relevant, weil besonders kleine und mittelständische Unternehmen oft Software, bspw. zum Betrieb eines Webshops nutzen, die sie nicht selbst entwickeln, wodurch sie keinerlei Informationen über mögliche Sicherheitslücken haben.

In einer bevorzugten Ausgestaltung werden mehrere sekundäre Systeme parallel betrieben, um mittels Load Balancing die Last zu verteilen und so Ladezeiten des betriebenen Dienstes zu minimieren und weiterhin vorteilhaft die Ausfallsicherheit zu erhöhen. Folglich können mehrere sekundäre Systeme (7) parallel betrieben werden, um vorteilhaft ein Load Balancing insbesondere der Webanwendung zu ermöglichen.

In einer weiterhin bevorzugten Implementierung des Verfahrens mit mehreren sekundären Systemen wird nach einer Verletzung der Integrität eines Datums der gesamte sekundäre Server bzw. das gesamte sekundäre System (7), auf dem die Integrität beschädigt wurde, isoliert, um eine spätere Analyse des gesamten Angriffs zu ermöglichen. In dem Fall gehört zur Isolation auch der Stop des gesamten Systems, um zu vermeiden, dass die ggf. laufende Schadsoftware ihre Spuren beseitigt. Dadurch wird die Attribution des Angriffs vorteilhaft erleichtert.

In einer weiterhin bevorzugten Implementierung des Verfahrens wird im Fall der Isolation des gesamten sekundären Systems das System nicht gestoppt, um die weitere Wirkungsweise der ggf. laufenden Schadsoftware zu analysieren. D.h., das isolierte sekundäre System wird vorzugsweise nicht beendet, sondern zum Zweck der Analyse der Schadsoftware in Isolation weiterbetrieben. Dieses Verfahren kann auch vorteilhaft angewandt werden, wenn vermutet werden kann, dass die Schadsoftware gerade beim Beenden des Programms ihre Spuren beseitigt.

Weiterhin bevorzugt wird im Falle des Isolierens eines sekundären Systems ein Ersatzsystem gestartet, um die Funktion des Load Balancing zu erhalten.

In einer weiteren Ausführung des Verfahrens wird außerdem ein Reverse Proxy eingeführt, um sogenannte (D)DoS-Angriffe zu unterbinden. Dies kann in einer Ausführung mit einem oder mehreren sekundären Systemen geschehen. So kann beispielsweise vorgesehen sein, dass auf dem sekundären System (7) ein Reverse Proxy zum Einsatz kommt, um den Webservice (8) vorteilhaft vor (D)DoS-Angriffen zu schützen.

Nach einer bevorzugten Ausgestaltung ist neben dem Load Balancing noch ein Schutz vor (D)DoS implementiert.

Denial of Service (DoS) ist eine Angriffsstrategie auf Webservices, bei der Angreifer versucht, möglichst viele Anfragen gleichzeitig an den Server zu senden, die dieser nicht alle gleichzeitig beantworten kann.

Auf diese Weise wird der Service überlastet und Kunden des Service erhalten mitunter gar keine Antwort, einen Fehler, oder die Antwort braucht sehr lange. Dies kann beim Betreiber, insbesondere wenn der Angriff länger andauert, erheblichen Schaden verursachen, da in dieser Zeit in der Regel Umsätze ausfallen, da die potentiellen Kunden die Leistung des Webservice nicht abrufen können. Erfolgt der Angriff von vielen verteilten Computersystem, spricht man von einem Distributed Denial of Service (DDoS).

Gerade in den vergangenen Jahren wurden Internet of Things (loT) Geräte, wie bspw. smarte Glühbirnen oder Webcams für solche DDoS Angriffe genutzt. Dies ist insbesondere möglich, weil deren Software nur sehr selten mit Sicherheitsupdates versorgt wird. Durch die Verwendung des erfindungsgemäßen Verfahrens in solchen loT-Devices wären diese ebenfalls geschützt und die Verwendung solcher Geräte für entsprechende Angriffe wäre deutlich erschwert.

Ferner wird im erfindungsgemäßen Verfahren ein Reverse Proxy umgesetzt, der unter Anderem dem Schutz vor (D)DoS-Angriffen dient, um vorteilhaft zu geringeren Ladezeiten beizutragen und einen Ausfall der Dienstes mit einhergehenden Umsatzverlusten zu vermeiden.

Insbesondere können auch mehrere sekundäre Systeme zum Zwecke des Load Balancing und der Reduzierung von Ladezeiten durch geschickte räumliche Verteilung verwendet werden.

In einer bevorzugten Ausführung des Verfahrens werden nach einer erfolgten Manipulation die manipulierten Daten innerhalb der Isolation analysiert. Die Datenanalyse kann hierbei mehreren möglichen Zielsetzungen dienen. In einer Ausgestaltung des Verfahrens ist die Zielsetzung der Analyse, das Ziel des Angriffs innerhalb des Webservice zu ermitteln. Dies ist dann vorteilhaft, wenn die manipulierten Daten ohne genauere Gefahrenanalyse isoliert wurden, beispielsweise um eine besonders schnelle Herstellung eines sicheren Zustands zu gewährleisten. In diesem Fall kann eine Zielanalyse nachträglich erfolgen. Vorteilhaft können durch die Analyse mögliche Schwachstellen im System ermittelt werden, die ein Angreifer ausnutzen wollte.

In einer weiteren Ausführung des Verfahrens ist die Zielsetzung der Analyse die Datengewinnung von Angriffsmustern aus der Manipulation. Vorteilhaft können dadurch Wissensdatenbanken von Angriffsmustern abgeglichen und erweitert werden, um neue Bedrohungen aufzunehmen oder mögliche Angreifer zu identifizieren. Vorteilhaft kann außerdem die Datenbasis für andere Sicherheitssysteme erweitert werden, welche nicht pauschal jede Manipulation isolieren, sondern zwischen bösartigen und gutartigen Manipulationen zu unterscheiden versuchen (siehe Blacklisting, Antivirenprogramme im Stand der Technik). Durch Sammlung oder Verkauf solcher Daten ergibt sich ein erfindungsgemäßer wirtschaftlicher Vorteil.

In einer Ausführung des Verfahrens wird die Analyse der manipulierten Daten manuell ausgeführt. Vorteilhaft kann hier unter Einbindung von Securityexperten ein Datensatz mit besonders hoher Güte entstehen, insbesondere bezüglich der Identifikation des Angriffsziels und der Klassifikation einer Manipulation als bösartig oder nicht bösartig.

In einer besonders bevorzugten Ausführung des Verfahrens wird die Analyse der manipulierten Daten automatisiert ausgeführt. Hierfür können statistische Analysemethoden zum Einsatz kommen, insbesondere das Clustering von Manipulationstypen, oder statistische Ähnlichkeitsanalysen mit bekannten Angriffstypen aus Wissensdatenbanken. In einer besonders bevorzugten Ausführung werden Methoden des Maschinellen Lernens für die Datenanalyse genutzt, insbesondere für das Clustering von Manipulationstypen und die Klassifikation des Grades der Bösartigkeit von Angriffen. Bei einer Manipulation semantischer Art (z.B. SQL-Injection) werden in einer besonders bevorzugten Ausführung des Verfahrens Methoden des Deep Learning zur Sprachverarbeitung eingesetzt, um Muster innerhalb der Manipulation zu erkennen oder eine Klassifizierung der Bösartigkeit durchzuführen. Durch jede automatisierte Datenanalyse kann die Effizienz der Datennutzung vorteilhaft deutlich gesteigert werden. Insbesondere durch Erhebung und Nutzung großer Mengen an Manipulationsdaten bieten automatisierte Datenanalyseverfahren außerdem zunehmende Präzision, wodurch sich ein Skaleneffekt ergibt.

Das erfindungsgemäße Verfahren wird auf verschiedenen Computersystemen eines primären sowie mindestens eines sekundären Systems, durch ein oder mehrere Computerprogrammprodukte realisiert.

Die Erfindung betrifft auch ein System zum Schutz der Integrität von Daten, insbesondere ein verteiltes Computersystem, bspw. ein verteiltes fraktioniertes Computersystem, umfassend Mittel zur Ausführung der Schritte des erfindungsgemäßen Verfahrens wie hierin definiert, wobei die einzelnen Schritte vorzugsweise gemeinsam oder einzeln in einer verteilten Computerumgebung verwirklicht sind. Beispiele für ein solches System sind ein vernetztes Client-Server-System mit einem Smartphone als Client, der Zugriff auf Speicher- oder Verarbeitungsressourcen in einer Computercloud hat, Filesharing durch Geräte in einem Peer-to-Peer-Netz, eine Augmented-Reality-Umgebung mit Head-Mounted Displays, autonome Fahrzeuge, die über ein Ad-hoc-Netz interagieren oder in einem Distributed-Ledger-System mittels Blockchain vernetzt sind. Gleichwohl kann auch ein Computerprogrammprodukt zum Schutz der Integrität von Daten vorgesehen sein, dass Befehle umfasst, die bei der Ausführung des Programms durch einen Computer diesen veranlassen, das erfindungsgemäße Verfahren, insbesondere die Schritte des Verfahrens, jeweils wie hierin definiert, auszuführen. Die Erfindung umfasst überdies auch ein computerlesbares Medium, das Befehle umfasst, die bei der Ausführung durch einen Computer diesen veranlassen, das erfindungsgemäße Verfahren, insbesondere die Schritte des Verfahrens, jeweils wie hierin definiert, auszuführen.

In einer bevorzugten Ausgestaltung der Erfindung ist zudem ein solches Computerprogrammprodukt, hierin auch als erstes Computerprogrammprodukt bezeichnet, vorgesehen, das Befehle umfasst die bei der Ausführung des Programms durch einen Computer diesen veranlassen, den Schritt des Erzeugens (S01) eines intendierten Zustands (3) von Daten ausführbar zu verwirklichen, wobei bevorzugt auch vermeintlich dynamische Daten in statische Daten umgewandelt werden. Zudem steuert es die Übertragung des intendierten Zustands an den Server im unsicheren Netzwerk entweder manuell, zeitgesteuert oder automatisch nach der Änderung des intendierten Zustandes der Daten. Außerdem ist es dazu geeignet, den intendierten Zustand entweder vollständig oder als Differenz-Update zu übertragen. Vorzugsweise ist das erste Computerprogrammprodukt innerhalb eines Systems, besonders bevorzugt innerhalb eines verteilten Computersystems, bspw. innerhalb eines verteilten fraktionierten Computersystems, wie hierin definiert, vorgesehen oder angeordnet.

Vorzugsweise werden durch das erste Computerprogrammprodukt im Schritt des Erzeugens des intendierten Zustands (S01) vermeintlich dynamische Daten des Webservice, wie bspw. durch PHP gerenderte HTML-Seiten, soweit es der betriebene Dienst erlaubt, als statische Dateien, wie bspw. HTML-, JSON- oder XML-Dateien, an das sekundäre Computersystem übertragen werden. Es kann unabhängig davon vorgesehen sein, dass das Auslösen des Übertragens der Daten von dem primären Computersystem (1) an ein sekundäres Computersystem (7)
a) manuell ausgelöst wird, oder
b) automatisch zeitgesteuert ausgelöst wird, oder
c) automatisch nach Veränderung des intendierten Zustandes der Daten
ausgelöst wird.

In einer Ausgestaltung der Erfindung kann vorgesehen sein, dass durch das erste Computerprogrammprodukt bei dem im Schritt des Übertragens der Daten (S02) nur die Differenz des intendierten Zustands zu dem zeitlich vorhergehenden intendierten Zustand der Daten vom primären Computersystem (1) an das sekundäre Computersystem (7) übertragen wird.

In einer Ausgestaltung der Erfindung kann vorgesehen sein, dass durch das erste Computerprogrammprodukt jede Änderung eines intendierten Zustands (3) und jede Übertragung an das sekundäre Computersystem im Schritt des Übertragens der Daten (S02) revisionssicher gespeichert wird, wodurch eine spätere Auditierung ermöglicht wird.

Nach einer besonders bevorzugten Ausgestaltung kann das erste

Computerprogrammprodukt derart eingerichtet sein, dass es Befehle umfasst die bei der Ausführung des Programms durch einen Computer diesen veranlassen, das erfindungsgemäße Verfahren, wie hierin definiert, auszuführen.

Die Erfindung umfasst ferner auch ein computerlesbares Medium (Datenträger), das das erste Computerprogrammprodukt, wie hierin definiert, insbesondere zur Definition des intendierten Zustandes in S01 umfasst.

Vorzugsweise umfasst das primäre Computersystem (primäre System) das erste Computerprogrammprodukt und/oder das computerlesbare Medium mit dem ersten Computerprogrammprodukt, das zur Erzeugung (S01) des intendierten Status der Daten, insbesondere entsprechend des hierin definierten Verfahrens eingerichtet ist. Vorzugsweise ist das primäre Computerprogrammprodukt innerhalb eines Systems, besonders bevorzugt innerhalb eines verteilten Computersystems, bspw. innerhalb eines verteilten fraktionierten Computersystems, jeweils wie hierin definiert, vorgesehen oder angeordnet.

Die Erfindung betrifft auch ein solches Computerprogrammprodukt, hierin auch als sekundäres Computerprogrammprodukt bezeichnet, das Befehle umfasst, die bei der Ausführung des Programms durch einen Computer diesen veranlassen, die Schritte S03 und S04, d.h. die Schritte des Prüfens (S03) und des Wiederherstellens (S04) des Anspruch 1 zu implementieren. Bevorzugt wird das Verbringen der manipulierten Daten in Quarantäne implementiert, wobei das Prüfen der Daten mittels kryptographischer Verfahren unmittelbar nach deren Manipulation erfolgt und die Datenbank durch eine der oben benannten Möglichkeiten sichert. Sollte das sekundäre Computerprogrammprodukt beendet werden, wird es automatisch durch das sekundäre Computersystem neu gestartet. Vorzugsweise ist das erste Computerprogrammprodukt innerhalb eines Systems, besonders bevorzugt innerhalb eines verteilten Computersystems, bspw. innerhalb eines verteilten fraktionierten Computersystems, wie hierin definiert, vorgesehen oder angeordnet.

Nach einer bevorzugten Ausgestaltung der Erfindung werden durch das sekundäre Computerprogrammprodukt Änderungen der Daten, als ein Beispiel für eine Manipulation (17) von Daten, auf Basis kryptographischer Verfahren festgestellt.

Es kann vorgesehen sein, dass das sekundäre Computerprogrammprodukt dazu eingerichtet ist, das durch dieses das Prüfen (S03) (20) der Integrität der Daten (auch als Überprüfen bezeichnet), insbesondere der Dateien und/oder Dateienteile, unmittelbar nach dem Manipulieren (17) der Daten, insbesondere der Dateien und/oder Dateienteile, erfolgt.

In einer Ausgestaltung der Erfindung kann vorgesehen sein, dass das sekundäre Computerprogrammprodukt derart eingerichtet ist, dass durch einen Nutzer definierte Daten (bspw. Dateien, Dateienteile und/oder andere Daten) für das Prüfen (S03) auf Manipulationen registriert werden oder durch einen Nutzer definierte Daten (bspw. Dateien, Dateienteile und/oder andere Daten) von dem Prüfen (S03) auf Manipulationen ausgenommen werden.

Nach einer bevorzugten Ausgestaltung der Erfindung ist das sekundäre Computerprogrammprodukt derart ausgestaltet, dass es Befehle umfasst, dass die Daten zum Erzeugen des Webservice aus Daten einer Datenbank ausgewählt werden, und wobei die Integrität der Daten in der Datenbank (4) gesichert wird, indem
a) entweder jede Anfrage an die Datenbank (13) zunächst, insbesondere durch den Agenten (11), auf schadhafte Eingaben (bspw. SQL Injections, oder Änderungen an verbotenen Datensätzen, wie Datenbanknutzern) überprüft, dann gesichert an die primäre Datenbank (4) des primären Computersystems (1) übertragen werden (14) und in der Folge die erfolgten Änderungen an die sekundäre Datenbank (9) im sekundären Computersystem (7) gespiegelt werden, oder
b) jede Anfrage an die Datenbank (13) zunächst, insbesondere durch den Agenten (11), auf schadhafte Eingaben überprüft und dann gesichert an das primäre Computersystem (1) übertragen werden (14) und auch Lesezugriffe (15) auf die Datenbank, insbesondere durch den Agenten (11), geprüft und an das primäre Computersystem übertragen werden (16), sodass keine Datenbank im sekundären System (7) notwendig ist, oder
c) die Datenbank auf dem sekundären System (9) regelmäßig, insbesondere durch den Agenten (11), auf ein Ändern von verbotenen Datensätzen, die nicht durch den Webservice (8) bearbeitet werden sollen,
überprüft wird.

Nach einer bevorzugten Ausgestaltung der Erfindung ist das sekundäre Computerprogrammmprodukt derart ausgestaltet, dass es Befehle umfasst, die es erlauben, nach einer erfolgten Manipulation die manipulierten Daten mittels manueller und automatisierter Datenverarbeitungsmethoden zu analysieren.

Vorzugsweise ist das sekundäre Computerprogrammprodukt innerhalb eines Systems, besonders bevorzugt innerhalb eines verteilten Computersystems, bspw. innerhalb eines verteilten fraktionierten Computersystems, wie hierin definiert, vorgesehen oder angeordnet.

Nach einer besonders bevorzugten Ausgestaltung der Erfindung können durch das sekundäre Computerprogrammprodukt - entsprechend der Konzeption - alle Merkmale des erfindungsgemäßen Verfahrens, wie hierin definiert, verwirklicht werden.

Das sekundäre Computerprogrammprodukt ist vorzugsweise auf einem sekundären computerlesbaren Medium (Datenträger) enthalten.

Das sekundäre Computerprogrammprodukt schützt bevorzugt ein tertiäres computerlesbares Medium (Datenträger).

Ein sekundäres Computersystem umfasst bevorzugt ein sekundäres und/oder ein tertiäres Medium. Ein Medium kann die Eigenschaften des sekundären und des tertiären Mediums miteinander vereinen. Bevorzugt sind auch die Computerprogrammprodukte dieser Anmeldung selbst durch ein sekundäres Computerprogrammprodukt geschützt, sodass sie selbst vorteilhaft vor Manipulation geschützt sind.

Ein tertiäres Computerprogrammprodukt implementiert vorzugsweise die Übertragung des intendierten Zustandes vom primären an das sekundäre System. Es ist Bestandteil eines computerlesbaren Mediums und wird entweder auf dem primären oder einem sekundären oder einem weiteren tertiären System ausgeführt. Vorzugsweise ist das tertiäre System zumindest teilweise, insbesondere vollständig durch das primären und/oder sekundäre, insbesondere durch das sekundäre Computerprogrammprodukt, wie hierin definiert, geschützt. Von der Erfindung ist daher vorzugsweise auch ein tertiäres Computerprogrammprodukt umfasst, das Befehle umfasst, die bei der Ausführung des Programms durch einen Computer diesen veranlassen, den Schritt des Übertragens (S02) entsprechend des erfindungsgemäßen Verfahrens zu implementieren.

Nach einer besonders bevorzugten Ausgestaltung der Erfindung können durch das tertiäre Computerprogrammprodukt - entsprechend der Konzeption - alle Merkmale des erfindungsgemäßen Verfahrens, wie hierin definiert, verwirklicht werden.

Nach einer bevorzugten Ausgestaltung der Erfindung ist das tertiäre Computerprogrammprodukt derart ausgestaltet, dass es Befehle umfasst, dass die Daten zum Erzeugen des Webservice aus Daten einer Datenbank ausgewählt werden, und wobei die Integrität der Daten in der Datenbank (4) gesichert wird, indem
a) entweder jede Anfrage an die Datenbank (13) zunächst, insbesondere durch den Agenten (11), auf schadhafte Eingaben (bspw. SQL Injections, oder Änderungen an verbotenen Datensätzen, wie Datenbanknutzern) überprüft, dann gesichert an die primäre Datenbank (4) des primären Computersystems (1) übertragen werden (14) und in der Folge die erfolgten Änderungen an die sekundäre Datenbank (9) im sekundären Computersystem (7) gespiegelt werden, oder
b) jede Anfrage an die Datenbank (13) zunächst, insbesondere durch den Agenten (11), auf schadhafte Eingaben überprüft und dann gesichert an das primäre Computersystem (1) übertragen werden (14) und auch Lesezugriffe (15) auf die Datenbank, insbesondere durch den Agenten (11), geprüft und an das primäre Computersystem übertragen werden (16), sodass keine Datenbank im sekundären System (7) notwendig ist, oder
c) die Datenbank auf dem sekundären System (9) regelmäßig, insbesondere durch den Agenten (11), auf ein Ändern von verbotenen Datensätzen, die nicht durch den Webservice (8) bearbeitet werden sollen,
überprüft wird.

Nach einer bevorzugten Ausgestaltung ist das tertiäre Computerprogrammprodukt derart ausgestaltet, dass mehrere sekundäre Systeme parallel betrieben werden, um vorteilhaft ein Load Balancing der Webanwendung zu ermöglichen. Dabei kann vorgesehen sein, dass vorteilhaft neben dem Load Balancing noch ein Schutz vor (D)DoS implementiert ist.

Nach einer bevorzugten Ausgestaltung ist das tertiäre Computerprogrammprodukt derart ausgestaltet, dass es Befehle umfasst, wodurch nach Verletzung der Integrität eines Datums das gesamte sekundäre System oder die mehreren sekundären Systeme, auf dem die Integrität beschädigt wurde, isoliert wird/werden.

Nach einer bevorzugten Ausgestaltung ist das tertiäre Computerprogrammprodukt derart ausgestaltet, dass es Befehle umfasst, wodurch das isolierte sekundäre System oder die mehreren isolierten sekundären Systeme nicht beendet wird/werden, sondern zum Zweck der Analyse der Schadsoftware in Isolation weiterbetrieben wird/werden.

Es kann vorgesehen sein, dass das tertiäre Computerprogrammprodukt derart ausgestaltet ist, dass es Befehle umfasst, wodurch nach dem Isolieren des (kompromittierten) Systems, dessen Integrität beschädigt wurde, ein weiteres sekundäres System als Ersatzsystem gestartet wird.

Nach einer bevorzugten Ausgestaltung ist das tertiäre Computerprogrammprodukt derart ausgestaltet, dass auf dem sekundären System ein Reverse Proxy zum Einsatz kommt, um den Webservice (8) vorteilhaft vor (D)DoS-Angriffen zu schützen.

Das tertiäre Computerprogrammprodukt ist vorzugsweise auf einem tertiären computerlesbaren Medium (Datenträger) enthalten.

Vorzugsweise umfasst ein tertiäres Computersystem (primäre System) das tertiäre Computerprogrammprodukt und/oder das tertiäre computerlesbare Medium mit dem tertiären Computerprogrammprodukt, das zum Übertragen (S02) innerhalb des erfindungsgemäßen Verfahrens eingerichtet ist. Vorzugsweise ist das tertiäre Computersystem innerhalb eines Systems, besonders bevorzugt innerhalb eines verteilten Computersystems, bspw. innerhalb eines verteilten fraktionierten Computersystems, wie hierin definiert, vorgesehen oder angeordnet.

Die Computerprogrammprodukte können zudem durch Plugins um weitere Funktionalitäten zum Betrieb und zur Verbesserung eines Webservices erweitert werden. Zum Beispiel könnte ein Plugin zur Aufbereitung und Analyse des generierten Datenverkehrs hinzugefügt werden, wodurch diese Dienstleistung vorteilhaft nicht durch einen Drittanbieter vorgenommen werden muss und andere Aspekte der Datensparsamkeit und des Datenschutzes gewahrt werden können, indem die Informationen beim Betreiber des Webdienstes verbleiben.

Die Erfindung umfasst auch ein Netzwerk, welches ein Computersystem, insbesondere ein System zum Schutz der Integrität von Daten, insbesondere ein verteiltes Computersystem, bspw. verteiltes fraktioniertes Computersystem, wie hierin definiert, und/oder ein primäres Computersystem, ein sekundäres Computersystem und/oder ein tertiäres Computersystem, jeweils wie hierin definiert, umfasst.

Um sicherzustellen, dass das bzw. die Computerprogrammprodukt(e) selbst nicht manipuliert wird/werden, wodurch der Schutz erlöschen würde, bieten sich mehrere Methoden an. Diese erschweren positiv die Veränderung der Funktionalität des Computerprogrammprodukts, sodass der Schutz weiter erhöht wird.

Einerseits kann das Computerprogrammprodukt zur Implementierung des Verfahrens die Ordnerstruktur bzw. das Medium, in der es selbst abgelegt ist, überwachen. Während es im Arbeitsspeicher des Computers liegt, ist es vor Manipulation stark geschützt. Wird nun das Programm selbst auf dem Medium modifiziert, kann es die Änderung erkennen und sich selbst wiederherstellen.

Ferner kann das Programm auf einem Medium, das nicht neu geschrieben werden kann, bspw. ein EPROM oder eine SD-Karte mit Schreibschutz gespeichert werden.

Des Weiteren schützen bereits heute viele Betriebssysteme Teile Ihrer Verzeichnisstruktur in der Form, dass diese nur im abgesicherten Modus beschrieben werden können und ansonsten nicht einmal durch das System selbst modifiziert werden können. Das Computerprogrammprodukt könnte in einem solchen Teil der Verzeichnisstruktur während der Nutzung des abgesicherten Modus hinterlegt werden, um es weiterhin vorteilhaft zu schützen.

Auch die Manipulation des Computerprogrammprodukts im Arbeitsspeicher ist möglich. Durch einen Fachmann könnte die Struktur des Programms im Arbeitsspeicher erkannt werden, wodurch dieser das Programm im Speicher suchen und durch Ausnutzen anderer Schwachstellen, wie zum Beispiel buffer overflows, manipulieren könnte. Durch gezielte Maßnahmen kann das Computerprogrammprodukt solche Angriffe positiv erschweren. Dafür füllt es zufällige Speicherbereiche mit zufälligen Inhalten, um eine Analyse und Manipulation der für die im Programm enthaltenen Anweisungen zu erschweren, indem deren Position bei jeder Ausführung und über die Zeit wechselt.

Weitere vorteilhafte Ausgestaltungen und Weiterbildungen ergeben sich aus den Unteransprüchen sowie aus der Beschreibung unter Bezugnahme auf die Figuren.

### Ausführungsbeispiele

Anhand folgender Figuren und Ausführungsbeispiele wird die vorliegende Erfindung näher erläutert, ohne die Erfindung auf diese zu beschränken.

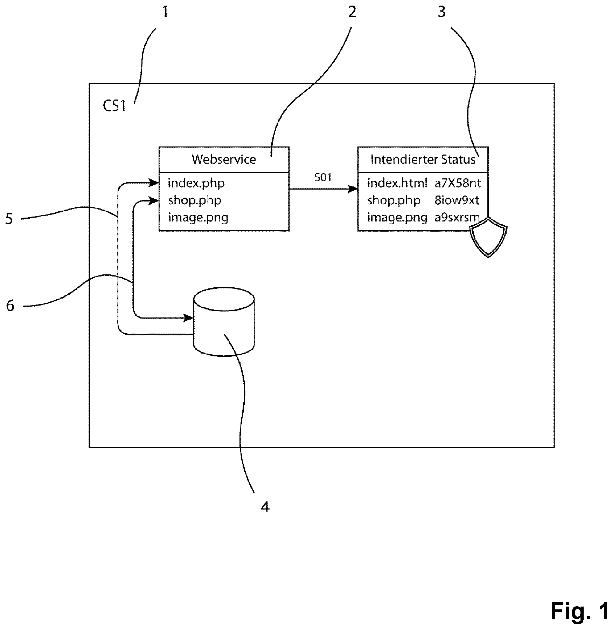

Dabei zeigt
- **Fig. 1:**: eine schematische Darstellung des primären Computersystems CS1 (1). Abgebildet ist ein auf CS1 laufender Webservice (2) mit dynamischen Inhalten ("index.php" und "shop.php"), sowie eine statische Bilddatei (image.png). Beide dynamische Dateien verwenden die Datenbank (4), allerdings liest (5) die Datei "index.php" Daten aus der Datenbank (4), die sich in diesem Beispiel nicht ändern. Daher kann die Datei "index.php" durch ein Computerprogrammprodukt entsprechend dem Anspruch 17 in eine statische Datei (index.html) umgewandelt werden (S01). Die Datei "shop.php" liest und schreibt (6) Daten aus der bzw. in die Datenbank (4). Daher kann diese nicht in eine statische Datei umgewandelt werden. Auch an der bereits statischen Datei ändert sich nichts. Somit ergibt sich der intendierte Zustand der Dateien des Webservice (3). Ferner werden in Schritt S01 die Hashes, angedeutet durch alphanumerische Zeichenketten neben den Dateinamen, berechnet und gespeichert. Der Schild soll die entsprechende Sicherung der Dateien verdeutlichen.

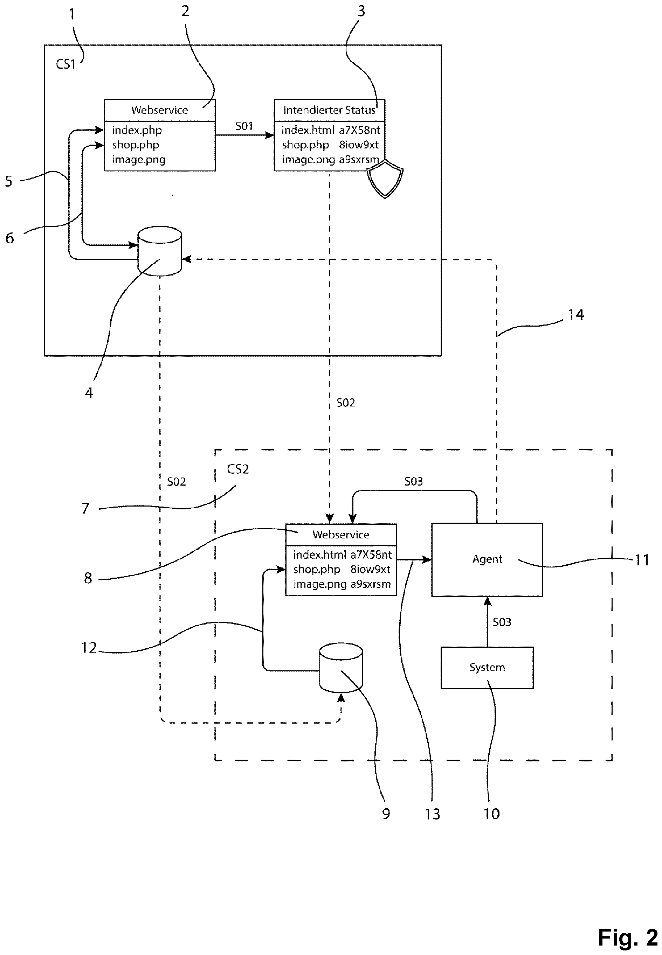

- **Fig. 2:**: Eine schematische Darstellung des CS1 (1) aus Fig. 1 samt eines zweiten, sekundären Systems CS2 (7) in einem unsicheren Netzwerk. Durch S02 wird der intendierte Zustand (3) der Datenbank (4) sowie der Dateien des Webservice (2) in das sekundäre System (7) überführt. Ein Agent (11) wird bei Veränderungen der Daten auf Dateisystemebene (gemeldet durch das Betriebssystem (10)) oder zeitlich regelmäßig tätig, um die Integrität der Daten des Webservice (2) zu überprüfen. Änderungen an der Datenbank (4) (in dem Beispiel durch die Datei "shop.php") werden durch den Agenten (11) geprüft (13), bevor dieser diese Änderungen an die Datenbank (4) im primären System (1) überträgt (14) und diese erneut durch S02 in die sekundäre Datenbank (9) des sekundären Systems (7) eingepflegt werden. Die dynamischen Dateien (im Beispiel die Datei "shop.php") lesen (12) die notwendigen Daten aus der Datenbank im sekundären System (9). Der Schritt S03, das Prüfen der Dateien des sekundären Webservice (8) durch den Agenten (11) nach der Manipulation, wird entweder zeitgesteuert oder durch einen Watchdog ausgelöst.

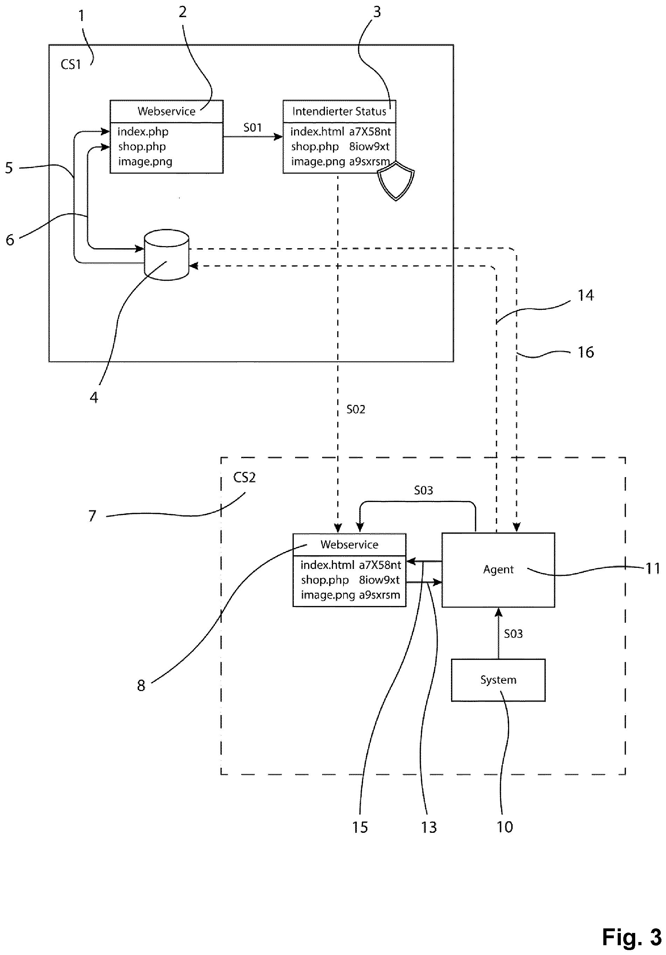

- **Fig. 3:**: Eine schematische Darstellung des primären Computersystems (1) und des sekundären Computersystems (7). In diesem Fall gibt es keine Datenbank im sekundären System (7). Durch S02 wird der intendierte Zustand (3) der Dateien des Webservice (2) in das sekundäre System CS2 (7) übertragen. Erneut löst das Betriebssystem (10) entweder bei Veränderung der Daten (über einen Watchdog) oder zeitlich gesteuert Schritt S03 aus, woraufhin der Agent (11) die Dateien des Webservice (8) im sekundären System (7) mit den intendierten Daten (3) des primären Systems (1) abgleicht. Da die sekundäre Datenbank entfällt, findet der Lesezugriff (15) von Dateien wie der "shop.php" auf die Datenbank (4) des primären Systems (1) durch den Agenten (11) statt (16). Der Schreibzugriff (13) wird analog zu Fig. 2 durch den Agenten (11) geprüft und danach an die primäre Datenbank (4) übertragen (14).

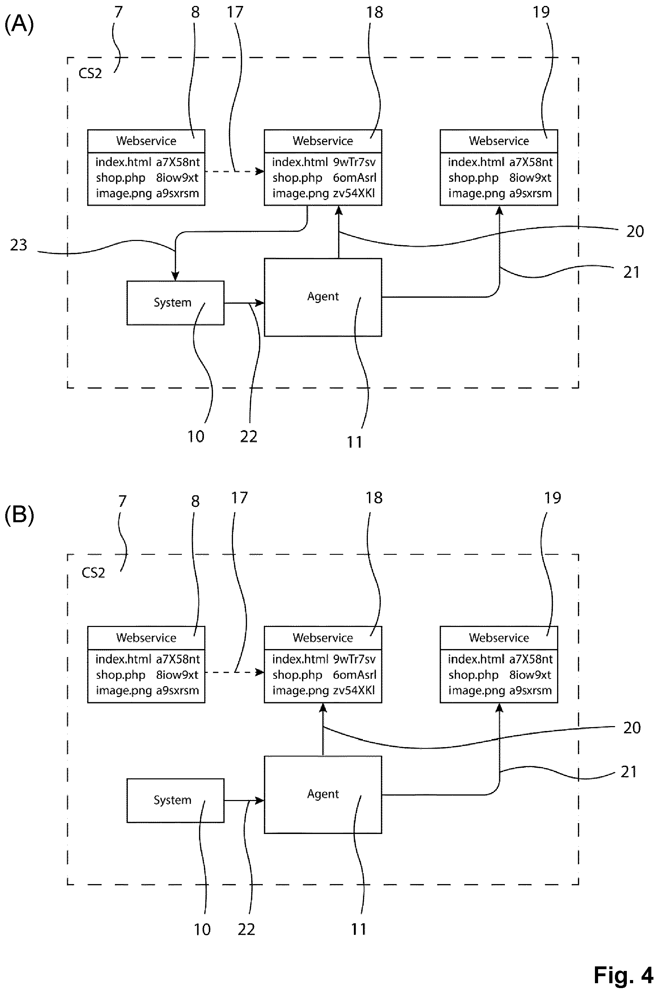

- **Fig. 4:**: Schematische Darstellung des Agierens des Agenten (11) im Falle einer unerwünschten Manipulation (17 der Dateien (S04)).
A) Das Verfahren mit Hilfe eins Watchdog: In diesem Fall reagiert (23) das Betriebsystem (10) auf die Änderung der Dateien des Webservices (8) und informiert (22) den Agenten (11). Dieser prüft (20) alle Dateien des Webservice im ggf. manipulierten Zustand (18). Nachdem er mittels eines kryptographischen Verfahrens, in diesem Fall mittels eines Hashwertes, eine Änderung erkannt hat, stellt er die erwünschten Datei-Zustände (19) wieder her (21) und verbringt die manipulierten Dateien (18) zwecks späterer Analyse in Quarantäne.
B) In diesem Fall meldet (22) das Betriebssystem (10) regelmäßig die Systemzeit oder das Überschreiten eines bestimmten Zeitintervalls an den Agenten (11), der den gegenwärtigen Zustand der Dateien des Webservices (18) prüft (20) und nach einer unerwünschten Manipulation (17) zu dem Schluss kommt, dass diese manipuliert wurden, woraufhin er den erwünschten Zustand der Dateien wiederherstellt (21) und ggf. die manipulierten Dateien (18) zwecks späterer Analyse in Quarantäne verbringt.
Allen Ausführungsformen ist der Umstand gemein, dass das primäre Computersystem CS1 (1) nur durch eine sichere Verbindung durch den Agenten (11) erreicht werden kann. Der Webservice (2) des primären Systems (1) ist ausschließlich notwendig, um den intendierten Zustand (3) herzustellen und vermeintlich dynamische Dateien in statische Dateien umwandeln zu können (bspw. durch Rendering von HTML durch eine PHP-Datei). Das Feststellen des intendierten Zustands in Schritt S01 kann durch verschiedene kryptographische Methoden erfolgen. Figur 2 und 3 unterscheiden sich lediglich in der Verwendung der Datenbank, insbesondere darin, wie die Integrität der Daten in der Datenbank sichergestellt wird.
Prinzipiell kann es eine beliebige Zahl der sekundären Systeme (7) geben, auch wenn dies nicht grafisch dargestellt wird. Der Agent (11) dient in der Konfiguration mit einem sekundären System (7) ferner auch als Reverse Proxy zum Schutz vor DDoS-Angriffen, sodass auch bei den sekundären Systemen (7) kein direkter Zugriff auf den Webservices (8) des sekundären Systems (7) erfolgt.

### Bezugszeichenliste

- 1: Computersystem 1 (primäres System)
- 2: Webservice auf dem primären System
- 3: Intendierter Status der Webservice-Dateien nach dem Reduzieren auf statische Dateien (S01) durch das primäre Computerprogrammprodukt
- 4: Datenbank des Webservice auf dem primären System
- 5: Lesezugriff der Datei "index.php" auf die Datenbank
- 6: Lese-/Schreibzugriff der shop.php auf die Datenbank
- 7: Computersystem 2 (sekundäres System)
- 8: Webservice mit dem intendierten Zustand der Dateien nach Schritt S02
- 9: Datenbank auf dem sekundären System, mit durch S02 synchronisierten erwünschtem Zustand
- 10: Betriebssystem-Mechanismus für den Start der Prüfung (S03) (Watchdog oder Timer)
- 11: Agent laufend auf Computersystem 2 (Sekundäres Computerprogrammprodukt)
- 12: Lesezugriff der Datei "shop.php" von der Datenbank des sekundären Systems
- 13: Schreibzugriff der Datei "shop.php" gesendet an den Agenten (14)
- 14: Schreibzugriff der Datei "shop.php" nach der Überprüfung an den Agenten zum Update des erwünschten Zustands der Datenbank des primären Systems
- 15: Lesezugriff der Datei "shop.php", bei der durch den Agenten direkt aus der Datenbank des primären Systems gelesen wird (16), ohne diese zuvor in eine sekundäre Datenbank zu spiegeln
- 16: Lesezugriff des Agenten ausgelöst durch den Lesezugriff der Datei "shop.php" (15) geprüft durch den Agenten (11)
- 17: Manipulation der Dateien des Webservice
- 18: Manipulierter Webservice
- 19: Webservice im wiederhergestellten intendierten Zustand
- 20: Feststellen des manipulierten Zustands der Dateien durch den Agenten
- 21: Wiederherstellen des intendierten Zustands durch den Agenten mit Löschung der manipulierten Dateien oder vorzugsweise Verbringen der Dateien im manipulierten Zustand in "Quarantäne"
- 22: Signal des Systems an den Agenten, dass eine Datei geändert wurde (Watchdog) oder ein Zeitintervall verstrichen ist (Timer)
- 23: Registrierung der Dateiänderung beim System

## Patentansprüche

1. **Verfahren zum Schutz der Integrität von Daten,** umfassend die folgenden Schritte:
a) Erzeugen (S01) eines intendierten Zustands (3) von Daten eines Webservice (2) auf einem primären, sicheren Computersystem (1);
b) Übertragen (S02) der Daten durch eine gesicherte Verbindung auf einen oder mehrere sekundäre Computersysteme (7) in einem potentiell unsicheren Netzwerk zum Bereitstellen eines Webservice (8);
c) Prüfen (S03) (20) der Integrität der Daten in einer Weise, dass ein Manipulieren der Dateien und Daten durch einen Angreifer auffällt,
wobei nach einer Manipulation (17) die Daten in Quarantäne verbracht werden, sodass diese im Nachhinein analysiert, aber nicht mehr ausgeführt werden und somit keinen Schaden verursachen können;
d) Wiederherstellen (S04) (21) des intendierten Zustands der Daten (19) zum Zeitpunkt vor dem Manipulieren.

2. Verfahren nach Anspruch 1, wobei das Prüfen (S03) (20) der Integrität der Daten unmittelbar nach dem Manipulieren (17) der Daten erfolgt.

3. Verfahren nach einem der Ansprüche 1 oder 2, wobei durch einen Nutzer definierte Daten für das Prüfen (S03) auf Manipulationen registriert werden oder durch einen Nutzer definierte Daten von dem Prüfen (S03) auf Manipulationen ausgenommen werden.

4. Verfahren nach einem der Ansprüche 1 bis 3, wobei im Schritt des Erzeugens des intendierten Zustands (S01) vermeintlich dynamische Daten des Webservice, wie bspw. durch PHP gerenderte HTML-Seiten, soweit es der betriebene Dienst erlaubt, als statische Dateien, wie bspw. HTML-, JSON- oder XML-Dateien, an das sekundäre Computersystem übertragen werden.

5. Verfahren nach einem der Ansprüche 1 bis 4, wobei das Auslösen des Übertragens der Daten von dem primären Computersystem (1) an ein sekundäres Computersystem (7)
a) manuell ausgelöst wird, oder
b) automatisch zeitgesteuert ausgelöst wird, oder
c) automatisch nach Veränderung des intendierten Zustandes der Daten
ausgelöst wird.

6. Verfahren nach einem der Ansprüche 1 bis 5, bei dem im Schritt des Übertragens der Daten (S02) nur die Differenz des intendierten Zustands zu dem zeitlich vorhergehenden intendierten Zustand der Daten vom primären Computersystem (1) an das sekundäre Computersystem (7) übertragen wird.

7. Verfahren nach einem der Ansprüche 1 bis 6, wobei die Daten zum Erzeugen des Webservice aus Daten einer Datenbank ausgewählt sind, und wobei die Integrität der Daten in der Datenbank (4) gesichert wird, indem
a) entweder jede Anfrage an die Datenbank (13) zunächst auf schadhafte Eingaben überprüft, dann gesichert an die primäre Datenbank (4) des primären Computersystems (1) übertragen werden (14) und in der Folge die erfolgten Änderungen an die sekundäre Datenbank (9) im sekundären Computersystem (7) gespiegelt werden, oder
b) jede Anfrage an die Datenbank (13) zunächst auf schadhafte Eingaben überprüft und dann gesichert an das primäre Computersystem (1) übertragen werden (14) und auch Lesezugriffe (15) auf die Datenbank, insbesondere durch den Agenten (11), geprüft und an das primäre Computersystem übertragen werden (16), sodass keine Datenbank im sekundären System (7) notwendig ist, oder
c) die Datenbank auf dem sekundären System (9) regelmäßig auf ein Ändern von verbotenen Datensätzen, die nicht durch den Webservice (8) bearbeitet werden sollen,
überprüft wird.

8. Verfahren nach einem der Ansprüche 1 bis 7, wobei mehrere sekundäre Systeme (7) parallel betrieben werden, um vorteilhaft ein Load Balancing insbesondere der Webanwendung zu ermöglichen.

9. Verfahren nach Anspruch 8, wobei nach Verletzung der Integrität eines Datums das gesamte sekundäre System (7), auf dem die Integrität beschädigt wurde, isoliert wird.

10. Verfahren nach Anspruch 9, wobei das isolierte sekundäre System nicht beendet wird, sondern zum Zweck der Analyse der Schadsoftware in Isolation weiterbetrieben wird.

11. Verfahren nach Anspruch 10, wobei nach dem Isolieren des Systems, dessen Integrität beschädigt wurde, ein weiteres sekundäres System als Ersatzsystem gestartet wird.

12. Verfahren nach einem der Ansprüche 1 bis 7, wobei auf dem sekundären System (7) ein Reverse Proxy zum Einsatz kommt, um den Webservice (8) vorteilhaft vor (D)DoS-Angriffen zu schützen.

13. Verfahren nach einem der Ansprüche 1 bis 12, wobei nach einer erfolgten Manipulation die manipulierten Daten mittels manueller und automatisierter Datenverarbeitungsmethoden analysiert werden.

14. **System zum Schutz der Integrität von Daten,** umfassend Mittel zur Ausführung der Schritte des Verfahrens nach einem der Ansprüche 1 bis 13.

15. **Computersystem zum Schutz der Integrität von Daten,** umfassend Mittel zur Ausführung der Schritte des Verfahrens nach einem der Ansprüche 1 bis 13, umfassend
a) ein **Primäres Computerprogrammprodukt,** umfassend Befehle, die bei der Ausführung des Programms durch einen Computer diesen veranlassen, den Schritt des Erzeugens (S01) eines intendierten Zustands (3) von Daten aus Anspruch 1 ausführbar zu verwirklichen, und
b) ein **Primäres Computersystem,** umfassend ein computerlesbares Medium, umfassend das primäre Computerprogrammprodukt, das zum Erzeugen (S01) des intendierten Status der Daten eingerichtet ist, und
c) ein **Sekundäres Computerprogrammprodukt,** umfassend Befehle, die bei der Ausführung des Programms durch einen Computer diesen veranlassen, die Schritte des Prüfens (S03) und des Wiederherstellens (S04) des Anspruch 1 zu implementieren, und
d) ein **Sekundäres Computersystem,** umfassend ein computerlesbares Medium, umfassend das sekundäre Computerprogrammprodukt, und
e) ein **Tertiäres Computerprogrammprodukt,** umfassend Befehle, die bei der Ausführung des Programms durch einen Computer diesen veranlassen, den Schritt des Übertragens (S02) gemäß Anspruch 1 zu implementieren, und
f) ein **Tertiäres Computersystem,** umfassend ein computerlesbares Medium, umfassend das tertiäre Computerprogrammprodukt.

16. Computersystem nach Anspruch 15, wobei ein computerlesbares Medium mindestens teilweise geschützt wird durch das sekundäre Computerprogrammprodukt.

## Claims

1. **Method** of protecting the integrity of data comprising the following steps:
a) Generating (S01) an intended state (3) of data of a web service (2) on a primary, secure computer system (1);
b) Transferring (S02) of data through a secure connection to one or more secondary computer systems (7) in a potentially insecure network to provide a web service (8);
c) Checking (S03) (20) the integrity of the data in such a way that manipulation of the files and data by an attacker is detected,
wherein after a manipulation (17), the data is placed in quarantine so that it can be analyzed afterwards but no longer executed and thus cannot cause any damage;
d) Restoring (S04) (21) the intended state of the data (19) at the time before the manipulation.

2. Method according to claim 1, wherein checking (S03) (20) the integrity of the data is performed immediately after manipulating (17) the data.

3. Method according to any one of claims 1 or 2, wherein data defined by a user is registered for checking (S03) for manipulations or data defined by a user is excluded from checking (S03) for manipulations.

4. Method according to any one of claims 1 to 3, wherein, in the step of generating the intended state (S01), supposedly dynamic data of the web service, such as e.g. HTML pages rendered by PHP, are transmitted to the secondary computer system as static files, such as HTML, JSON or XML files, insofar as the operated service permits.

5. Method according to any one of claims 1 to 4, wherein triggering the transferring of data from the primary computer system (1) to a secondary computer system (7)
a) is triggered manually, or
b) is triggered automatically on a time-controlled basis, or
c) is triggered automatically after changing the intended state of the data.

6. Method according to any one of claims 1 to 5, wherein in the step transferring of data (S02) only the difference of the intended state to the temporally preceding intended state of the data is transferred from the primary computer system (1) to the secondary computer system (7).

7. Method according to any one of claims 1 to 6, wherein the data for generating the web service is selected from data of a database, and wherein the integrity of the data in the database (4) is secured, in that
a) either each query to the database (13) is first checked for corrupt entries, then transmitted (14) in a secured manner to the primary database (4) of the primary computer system (1) and subsequently the changes made are mirrored to the secondary database (9) in the secondary computer system (7), or
b) each request to the database (13) is first checked for malicious entries and then transmitted (14) in a secured manner to the primary computer system (1), and read accesses (15) to the database, in particular by the agent (11), are also checked and transmitted (16) to the primary computer system, so that no database is required in the secondary system (7), or
c) the database on the secondary system (9) is checked regularly for changes to prohibited data records that should not be edited by the web service (8).

8. Method according to any one of claims 1 to 7, wherein several secondary systems (7) are operated in parallel in order to advantageously enable load balancing, in particular of the web application.

9. Method according to claim 8, wherein upon violation of the integrity of a datum, the entire secondary system (7) on which the integrity has been damaged is isolated.

10. Method according to claim 9, wherein the isolated secondary system is not terminated but continues to operate in isolation for the purpose of analyzing the malware.

11. Method according to claim 10, wherein after isolating the system whose integrity has been damaged, another secondary system is started as a replacement system.

12. Method according to any one of claims 1 to 7, wherein a reverse proxy is used on the secondary system (7) to advantageously protect the web service (8) from (D)DoS attacks.

13. Method according to any one of any one of claims 1 to 12, wherein after a manipulation has been performed, the manipulated data is analyzed by manual and automated data processing methods.

14. **A system for protecting the integrity of data,** comprising means for carrying out the steps of the method according to claim 1 to 13.

15. **Computer system for protecting the integrity of data,** comprising means for carrying out the steps of the method according to any claims 1 to 13, comprising
a) a **primary computer program product,** comprising instructions which, when the program is executed by a computer, cause the computer to realize the step of generating (S01) an intended state (3) of data according to any claims 1 to 13, and
b) a **primary computer system** comprising a computer-readable medium comprising the primary computer program product, set up to generate (S01) the intended status of the data, and
c) a **secondary computer program product** comprising instructions which, when the program is executed by a computer, cause the computer to implement the checking (S03) and Restoring (S04) steps of claim 1, and
d) a **secondary computer system** comprising a computer-readable medium comprising the secondary computer program product, and
e) a **tertiary computer program product** comprising instructions which, when the program is executed by a computer, cause the computer to implement the step of transmitting (S02) according to claim 1, and
f) a **tertiary computer system** comprising a computer-readable medium comprising a tertiary computer program product.

16. Computer system according to claim 15, wherein the computer-readable medium at least partially protected by the secondary computer program product.

## Revendications

1. Procédé permettant de protéger l'intégrité de données, comprenant les étapes suivantes consistant à :
a) générer (S01) un état voulu (3) des données d'un service web (2) sur un système informatique sûr primaire (1) ;
b) transmettre (S02) les données par une liaison sécurisée à un ou plusieurs systèmes informatiques secondaires (7) dans un réseau potentiellement non sûr afin de fournir un service web (8) ;
c) vérifier (S03) (20) l'intégrité des données d'une manière telle qu'une manipulation des fichiers et des données par un attaquant soit évidente,
dans lequel, après une manipulation (17), les données sont mises en quarantaine de sorte qu'elles soient ultérieurement analysées mais ne soient plus exécutées et ne puissent donc pas causer de dégâts ;
d) rétablir (S04) (21) l'état voulu des données (19) à l'instant avant la manipulation.

2. Procédé selon la revendication 1, dans lequel la vérification (S03) (20) de l'intégrité des données est effectuée immédiatement après la manipulation (17) des données.

3. Procédé selon l'une quelconque des revendications 1 ou 2, dans lequel des données définies par un utilisateur sont enregistrées pour la vérification (S03) quant à des manipulations, ou des données définies par un utilisateur sont exclues de la vérification (S03) quant à des manipulations.

4. Procédé selon l'une quelconque des revendications 1 à 3, dans lequel à l'étape de génération de l'état voulu (S01), des données supposées dynamiques du service web, comme par exemple des pages HTML rendues par PHP, dans la mesure où le service exploité le permet, sont transmises au système informatique secondaire sous forme de données statiques, comme par exemple de fichiers HTML, JSON ou XML.

5. Procédé selon l'une quelconque des revendications 1 à 4, dans lequel le déclenchement de la transmission des données du système informatique primaire (1) à un système informatique secondaire (7) est
a) déclenché manuellement, ou
b) déclenché de manière automatique avec temporisation, ou
c) déclenché automatiquement suite à un changement de l'état voulu des données.

6. Procédé selon l'une quelconque des revendications 1 à 5, dans lequel à l'étape de transmission des données (S02), seule la différence de l'état voulu par rapport à l'état voulu temporellement précédent des données est transmise du système informatique primaire (1) au système informatique secondaire (7).

7. Procédé selon l'une quelconque des revendications 1 à 6, dans lequel les données pour générer le service web sont sélectionnées parmi des données d'une base de données, et dans lequel l'intégrité des données dans la base de données (4) est sécurisée en ce que
a) soit chaque requête à la base de données (13) est d'abord vérifiée quant à des entrées endommagées, est ensuite transmise (14) de manière sécurisée à la base de données primaire (4) du système informatique primaire (1), et par la suite, les modifications effectuées sur la base de données secondaire (9) sont clonées dans le système informatique secondaire (7), ou
b) chaque requête à la base de données (13) est d'abord vérifiée quant à des entrées endommagées, et est ensuite transmise (14) de manière sécurisée au système informatique primaire (1), et des accès en lecture (15) à la base de données, en particulier par l'agent (11), sont également vérifiés et transmis (16) au système informatique primaire de sorte qu'aucune base de données n'est nécessaire dans le système secondaire (7), ou
c) la base de données sur le système secondaire (9) est vérifiée régulièrement quant à un changement de jeux de données interdits qui ne doivent pas être traités par le service web (8).

8. Procédé selon l'une quelconque des revendications 1 à 7, dans lequel plusieurs systèmes secondaires (7) fonctionnent en parallèle pour permettre de manière avantageuse un équilibrage de charge, en particulier de l'application web.

9. Procédé selon la revendication 8, dans lequel après la violation de l'intégrité d'une donnée, tout le système secondaire (7) sur lequel l'intégrité a été violée est isolé.

10. Procédé selon la revendication 9, dans lequel le système secondaire isolé n'est pas terminé mais continue à fonctionner dans le but d'analyser le logiciel malveillant en isolation.

11. Procédé selon la revendication 10, dans lequel, une fois le système dont l'intégrité a été violée isolé, un autre système secondaire est démarré en tant système de secours.

12. Procédé selon l'une quelconque des revendications 1 à 7, dans lequel sur le système secondaire (7), un mandataire inverse est mis en œuvre pour protéger de façon avantageuse le service web (8) des attaques (D)DoS.

13. Procédé selon l'une quelconque des revendications 1 à 12, dans lequel après une manipulation effectuée, les données manipulées sont analysées au moyen de procédés de traitement de données manuels et automatisés.

14. Système permettant de protéger l'intégrité de données, comprenant des moyens pour exécuter les étapes du procédé selon l'une quelconque des revendications 1 à 13.

15. Système informatique permettant de protéger l'intégrité de données, comprenant des moyens pour exécuter les étapes du procédé selon l'une quelconque des revendications 1 à 13, comprenant
a) un produit de programme informatique primaire, comprenant des instructions qui, lors de l'exécution du programme par un ordinateur, font que celui-ci réalise de manière exécutable l'étape de génération (S01) d'un état voulu (3) de données selon la revendication 1, et
b) un système informatique primaire, comprenant un support lisible par ordinateur, comprenant le produit de programme informatique primaire qui est conçu pour générer (S01) l'état voulu des données, et
c) un produit de programme informatique secondaire, comprenant des instructions qui, lors de l'exécution du programme par un ordinateur, font que celui-ci met en œuvre les étapes de vérification (S03) et de rétablissement (S04) selon la revendication 1, et
d) un système informatique secondaire, comprenant un support lisible par ordinateur, comprenant le produit de programme informatique secondaire, et
e) un produit de programme informatique tertiaire, comprenant des instructions qui, lors de l'exécution du programme par un ordinateur, font que celui-ci met en œuvre l'étape de transmission (S02) selon la revendication 1, et
f) un système informatique tertiaire, comprenant un support lisible par ordinateur, comprenant le produit de programme informatique tertiaire.

16. Système informatique selon la revendication 15, dans lequel le support lisible par ordinateur est protégé au moins partiellement par le produit de programme informatique secondaire.
